# FASCICULE DE BREVET EUROPEEN

(11) **EP 4 214 598 B1**
(45) Date de publication et mention de la délivrance du brevet: **23.07.2025**
(21) Numéro de dépôt: 21769758.0
(22) Date de dépôt: 17.09.2021
(51) Int. Cl.: G06F 3/0354, G06F 3/041, G06F 3/046, G06F 3/044

(54) **PROCEDE ET DISPOSITIF DE SUIVI D'UNE EXTREMITE D'UN USTENSILE COMPORTANT UNE RECALIBRATION D'UNE DISTANCE ENTRE L'EXTREMITE ET UN OBJET MAGNETIQUE SOLIDAIRE DE L'USTENSILE**
VERFAHREN UND VORRICHTUNG ZUR VERFOLGUNG EINES ENDES EINES UTENSILS MIT REKALIBRIERUNG EINES ABSTANDES ZWISCHEN DEM ENDE UND EINEM AM UTENSIL SICHER BEFESTIGTEN MAGNETISCHEN OBJEKT
METHOD AND DEVICE FOR TRACKING AN END OF A UTENSIL COMPRISING A RECALIBRATION OF A DISTANCE BETWEEN THE END AND A MAGNETIC OBJECT SECURELY FASTENED TO THE UTENSIL

(30) Priorité: 21.09.2020 FR 2009524
(43) Date de publication de la demande: 26.07.2023
(73) Titulaire: Advanced Magnetic Interaction, AMI, 38170 Seyssinet-Pariset (FR)
(72) Inventeur: DUPRE LA TOUR, Jean-Marie, 38170 SEYSSINET PARISET (FR); HAUTSON, Tristan, 38170 SEYSSINET PARISET (FR)
(74) Mandataire: Peterreins Schley
(86) Numéro de dépôt international: PCT/EP2021/075730
(87) Numéro de publication internationale: WO 2022/058570

(56) Documents cités:
- WO-A1-2013/049286
- FR-A1- 2 988 874
- US-A1- 2008 106 520
- JEAN RENARD WARD ET AL: "Digitizer Technology: Performance Characteristics and the Effects on the User Interface", IEEE COMPUTER GRAPHICS AND APPLICATIONS, IEEE SERVICE CENTER, NEW YORK, NY, US, vol. 7, no. 4, 1 April 1987 (1987-04-01), pages 31 - 44, XP011363039, ISSN: 0272-1716, DOI: 10.1109/MCG.1987.276869

## Description

### DOMAINE TECHNIQUE

L'invention porte sur le suivi, par un réseau de magnétomètres, de la pointe d'un ustensile équipé d'un objet magnétique, cet ustensile étant alors manipulé par un utilisateur. L'invention trouve une application notamment dans le cadre du relevé de la trace effectuée par la pointe d'un ustensile sur une surface de référence, voire dans le cadre de l'interface homme-machine et la manipulation d'objets virtuels par l'utilisateur au moyen de l'ustensile.

### ÉTAT DE LA TECHNIQUE ANTÉRIEURE

On connaît des procédés de suivi d'un ustensile équipé d'un objet magnétique au moyen d'un réseau de magnétomètres, notamment dans le cadre du relevé de la trace de la pointe d'un ustensile sur une surface de référence, par exemple la pointe d'un stylet, d'un crayon ou autre, permettent notamment de numériser le dessin ou l'écriture réalisée par un utilisateur manipulant l'ustensile.

Le document WO2013/144338A1 décrit un exemple de procédé de suivi de la pointe d'un ustensile au moyen d'un réseau de magnétomètres qui permet de suivre la position d'un aimant fixé à l'ustensile. La distance entre l'aimant et la pointe est fixée et ne varie pas dans le temps. Une unité de calcul permet de déterminer la position et l'orientation de l'aimant, puis, connaissant la valeur fixée de la distance aimant-pointe, d'en déduire la position de la pointe.

Cependant, au cours de la manipulation de l'ustensile par un utilisateur, il peut arriver que cet aimant soit déplacé vis-à-vis de sa position initiale, la valeur effective de la distance aimant-pointe étant alors différente de la valeur initiale fixée. Cela peut conduire à une erreur dans la détermination de la position de la pointe.

### EXPOSÉ DE L'INVENTION

L'invention a pour objectif de remédier au moins en partie aux inconvénients de l'art antérieur, et plus particulièrement de proposer un procédé et un système de suivi d'une pointe d'un ustensile au moyen d'un réseau de magnétomètres, qui permette de réduire l'erreur dans la détermination de la position de la pointe lorsque la distance entre la pointe et un objet magnétique solidaire de l'ustensile est modifiée au cours de la manipulation de l'ustensile.

Pour cela, l'objet de l'invention est un procédé de suivi d'une première extrémité d'un ustensile manipulé par un utilisateur, un objet magnétique étant solidaire de l'ustensile et éloigné de la première extrémité suivant un axe longitudinal Δ de l'ustensile d'une première distance non nulle, l'objet magnétique présentant un moment magnétique m colinéaire à l'axe longitudinal Δ, le procédé comportant les étapes suivantes :
- manipulation de l'ustensile par un utilisateur, la première extrémité étant alternativement en contact et en non-contact avec une surface de référence,
- mesure d'un champ magnétique émis par l'objet magnétique à différents instants de mesure successifs, par un réseau de magnétomètres solidaires de la surface de référence ;
- détermination d'un vecteur d'état X_{A}(tₙ) représentatif de la position P_{A}(tₙ) et du moment magnétique m(tₙ) de l'objet magnétique, à partir des mesures du champ magnétique ;
- détermination de la position Pₚ(tₙ) de la première extrémité de l'ustensile à partir du vecteur d'état X_{A}(tₙ) et d'une valeur enregistrée préalablement de la première distance entre la première extrémité et l'objet magnétique.

Selon l'invention, la première distance entre la première extrémité et l'objet magnétique peut être modifiée lors de la manipulation de l'ustensile alors que la première extrémité n'est pas en contact avec la surface de référence, par translation de l'objet magnétique suivant l'axe longitudinal Δ de sorte qu'elle présente une valeur dite effective différente de la valeur enregistrée. Le procédé comporte alors les étapes suivantes :
- détermination d'un paramètre κ(tₙ) représentatif d'un contact entre la première extrémité et la surface de référence appartenant à un capteur tactile, et lorsque le contact est détecté par le détecteur tactile :
   o détermination d'une valeur d'une première distance dite projetée, celle-ci étant égale à une distance entre la position Pₐ(tₙ) de l'objet magnétique et une position P_{I}(tₙ) d'un point d'intersection I entre la surface de référence et une droite colinéaire au moment magnétique m(tₙ), puis
   o détermination de la valeur effective de la première distance à partir de la valeur déterminée de la première distance projetée ;
   o mise à jour de la valeur enregistrée de la première distance par remplacement de la valeur préalable enregistrée par la valeur effective déterminée de la première distance.

Certains aspects préférés mais non limitatifs de ce procédé sont les suivants.

La valeur de la première distance projetée peut être déterminée à partir d'une norme ∥P_{A}P_{I}(tₙ)∥ d'un premier vecteur P_{A}P_{I}(tₙ) allant de la position P_{A} de l'objet magnétique à la position P_{I} du point d'intersection I, cette norme ∥P_{A}P_{I}(tₙ)∥ du premier vecteur P_{A}P_{I}(tₙ) étant déterminée à partir d'une norme ||m|| du moment magnétique m, de la coordonnée m_{z} du moment magnétique suivant un axe vertical orthogonal au plan de la surface de référence, et à partir d'une première distance h_{A,z} suivant l'axe vertical entre la position P_{A} de l'objet magnétique et la surface de référence.

Lorsque le contact est détecté, la position P_{I} du point d'intersection I peut être déterminée à partir de la position P_{A} de l'objet magnétique et à partir du premier vecteur P_{A}P_{I}(tₙ), celui-ci étant déterminé à partir de la norme ∥P_{A}P_{I}(tₙ)∥ préalablement déterminée, du moment magnétique m et de la norme ||m|| du moment magnétique.

La première extrémité peut présenter une forme courbe, et lorsque le contact est détecté, le moment magnétique m peut présenter un angle d'inclinaison ϕ non nul vis-à-vis de l'axe vertical, de sorte que la première extrémité comporte une zone d'extrémité située dans le prolongement de l'axe longitudinal Δ, ainsi qu'une zone de contact, distincte de la zone d'extrémité, au niveau de laquelle la première extrémité est au contact de la surface de référence, une position de contact effectif P_{C} étant alors déterminée à partir de la position P_{A} et du moment magnétique m de l'objet magnétique, et à partir d'au moins un paramètre géométrique préenregistré représentatif de la forme courbe de la première extrémité.

Le paramètre géométrique préenregistré peut être le centre d'une sphère de rayon R dont une surface est tangente localement à une surface de la première extrémité (4) et passant par la position P_{P} et par la position de contact effectif P_{C}, la position de contact effectif P_{C} peut être déterminée à partir du moment magnétique m et de sa norme ||m|| et à partir d'une distance h'_{A,z} suivant l'axe vertical entre la position P_{A} de l'objet magnétique et un plan parallèle à la surface de référence et passant par le centre de la sphère.

La position de contact effectif P_{C} de la première extrémité peut être affichée sur une interface graphique.

Peut être affichée sur une interface graphique, la position P_{P} de la première extrémité, ou une position de la première extrémité déterminée par projection de la position P_{P} sur la surface de référence suivant un axe colinéaire au moment magnétique m ou suivant un axe vertical orthogonal à la surface de référence.

La position P_{P} de la première extrémité peut être déterminée à partir du moment magnétique m, de sa norme ||m||, et de la valeur enregistrée de la première distance projetée, ou lorsqu'aucune mise à jour de la première distance n'a encore eu lieu, de la valeur préenregistrée de ladite première distance.

L'étape de détermination de la première distance projetée peut ne pas être lorsque le moment magnétique m de l'objet magnétique présente un angle d'inclinaison ϕ supérieur à 60° vis-à-vis d'un axe vertical orthogonal au plan de la surface de référence.

Le capteur tactile peut être inactif tant que la position P_{P} de la première extrémité est supérieure à une valeur seuil prédéfinie P_{P,th} suivant un axe vertical orthogonal au plan de la surface de référence, et peut être activé électriquement lorsque la position P_{P} est inférieure ou égale à la valeur seuil P_{P,th}.

Le capteur tactile peut être un capteur matriciel comportant une matrice de pixels distincts solidaires de la surface de référence et adaptés à fournir un signal électrique de réponse représentatif d'un contact de la première extrémité sur la surface de référence. Le procédé peut comporter une détermination d'au moins un pixel dit le plus proche présentant une distance vis-à-vis de la position P_{I} inférieure ou égale à une valeur seuil prédéfinie, seul le pixel le plus proche étant activé pour détecter le contact.

L'ustensile peut comporter une deuxième extrémité opposée à la première extrémité suivant l'axe longitudinal Δ, l'objet magnétique étant éloigné de la deuxième extrémité suivant un axe longitudinal Δ d'une deuxième distance non nulle. Le procédé peut comporter une étape de détermination de l'orientation +m ou -m du moment magnétique m dirigée vers la première extrémité.

Le procédé de suivi peut assurer en outre le suivi de la deuxième extrémité de l'ustensile, la deuxième distance entre la deuxième extrémité et l'objet magnétique pouvant être modifiée lors de la manipulation. Le procédé comporte les étapes suivantes :
- au cours de l'étape de manipulation de l'ustensile par un utilisateur, la deuxième extrémité est alternativement en contact et en non-contact avec une surface de référence lors de la manipulation de l'ustensile alors que la deuxième extrémité n'est pas en contact avec la surface de référence, la deuxième distance est modifiée par translation de l'objet magnétique suivant l'axe longitudinal Δ de sorte qu'elle présente une deuxième valeur dite effective différente d'une deuxième valeur enregistrée ;
- détermination de la position P_{P'}(tₙ) de la deuxième extrémité de l'ustensile à partir du vecteur d'état Xₐ(tₙ), de la valeur enregistrée préalablement de la deuxième distance entre la deuxième extrémité et l'objet magnétique, et de l'orientation du moment magnétique m en direction de la deuxième extrémité ;
- détermination d'un paramètre κ'(tₙ) représentatif d'un contact entre la deuxième extrémité et la surface de référence, et lorsque le contact est détecté par le capteur tactile :
   o détermination d'une valeur d'une deuxième distance dite projetée, celle-ci étant égale à une distance entre la position P_{A}(tₙ) de l'objet magnétique et une position P_{I}(tₙ) d'un point d'intersection I entre la surface de référence et une droite colinéaire au moment magnétique m(tₙ), puis ;
   o détermination de la valeur effective de la deuxième distance à partir de la valeur déterminée de la deuxième distance projetée ;
   o mise à jour de la valeur enregistrée de la deuxième distance par remplacement de la valeur enregistrée préalable par la valeur effective déterminée de la deuxième distance.

L'invention porte également sur un système de suivi d'une première extrémité d'un ustensile, comportant :
- un ustensile,
   o destiné à être manipulé par un utilisateur pour amener la première extrémité à être alternativement en contact et en non-contact avec une surface de référence ;
   o un objet magnétique étant solidaire de l'ustensile et éloigné de la première extrémité suivant un axe longitudinal Δ de l'ustensile d'une première distance non nulle pouvant varier lors de la manipulation de l'ustensile par un utilisateur alors que la première extrémité (4) n'est pas en contact avec la surface de référence (2) par translation de l'objet magnétique suivant l'axe longitudinal Δ de sorte qu'elle présente une valeur dite effective différente d'une valeur enregistrée, l'objet magnétique présentant un moment magnétique m colinéaire à l'axe longitudinal Δ ;
- un dispositif de localisation, comportant :
   o un réseau de magnétomètres, solidaire de la surface de référence, et adaptés à mesurer un champ magnétique émis par l'objet magnétique ;
   o une unité de calcul électronique, comportant une valeur enregistrée (D₁₍ₖ₎) préalablement de la première distance entre la première extrémité et l'objet magnétique, et étant adaptée à :
      ▪ déterminer un vecteur d'état X_{A} X_{A}(tₙ) représentatif d'une position P_{A}(tₙ) et du moment magnétique m(tₙ) de l'objet magnétique à partir du champ magnétique mesuré ;
      ▪ déterminer une position P_{P}(tₙ) de la première extrémité à partir du vecteur d'état X_{A}(tₙ) et de la valeur enregistrée (D₁₍ₖ₎) préalablement de la première distance entre la première extrémité et l'objet magnétique ;
      ▪ lorsqu'un contact est détecté entre la première extrémité et la surface de référence par un capteur tactile, déterminer une valeur d'une première distance dite projetée, celle-ci étant égale à une distance entre la position P_{A}(tₙ) de l'objet magnétique et une position P_{I}(tₙ) d'un point d'intersection I entre la surface de référence et une droite colinéaire au moment magnétique m(tₙ), puis déterminer la valeur effective de la première distance à partir de la valeur déterminée de la première distance projetée ; et mettre à jour la valeur enregistrée de la première distance par remplacement de la valeur enregistrée préalable par la valeur effective déterminée de la première distance ;
- le capteur tactile, comportant la surface de référence, adaptée à détecter un contact entre la première extrémité et la surface de référence, et à transmettre l'information de contact au dispositif de localisation.

### BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :
la figure 1 est une vue schématique et partielle, en coupe, d'un système de suivi d'une pointe d'un ustensile sur une surface de référence selon un mode de réalisation ;
la figure 2 est une vue schématique et partielle, en éclaté, du système de suivi illustré sur la fig.1 ;
la figure 3 est un organigramme illustrant des étapes d'un procédé de suivi de la pointe d'un ustensile selon un mode de réalisation ;
la figure 4A est une vue schématique et partielle, en coupe, d'un système de suivi illustré sur la fig.5 lors d'une phase de contact, dans lequel la pointe de l'ustensile n'est pas arrondie ;
la figure 4B est une vue schématique et partielle, en coupe, d'un système de suivi selon une autre variante de réalisation, lors d'une phase de contact, dans lequel la pointe de l'ustensile est arrondie.
la figure 5 est une vue schématique et partielle, en perspective, d'un système de suivi de la pointe d'un ustensile selon une variante de réalisation, lors d'une phase de non-contact.

### EXPOSÉ DÉTAILLÉ DE MODES DE RÉALISATION PARTICULIERS

Sur les figures et dans la suite de la description, les mêmes références représentent les éléments identiques ou similaires. De plus, les différents éléments ne sont pas représentés à l'échelle de manière à privilégier la clarté des figures. Par ailleurs, les différents modes de réalisation et variantes ne sont pas exclusifs les uns des autres et peuvent être combinés entre eux. Sauf indication contraire, les termes « sensiblement », « environ », « de l'ordre de » signifient à 10% près, et de préférence à 5% près. Par ailleurs, les termes « compris entre ... et ... » et équivalents signifient que les bornes sont incluses, sauf mention contraire.

L'invention porte sur un système et un procédé de suivi d'une première extrémité d'un ustensile, par exemple d'une pointe, muni d'un objet magnétique destiné à être manipulé par un utilisateur. Il est adapté à :
- déterminer un vecteur d'état X_{A} représentatif de la position P_{A} et de l'orientation de l'objet magnétique dans un repère OXYZ ;
- déterminer la position P_{P} de la pointe de l'ustensile à partir du vecteur d'état X_{A} et d'une valeur enregistrée de la distance D entre l'objet magnétique et la pointe ;
- déterminer, lorsqu'un contact de la pointe sur une surface de référence est détecté, la valeur effective de la distance entre l'objet magnétique et la pointe (appelée première distance et notée D₁), et mettre à jour la valeur enregistrée de la distance D₁ à partir de la valeur effective déterminée.

Pour cela, le système de suivi comporte d'une manière générale :
- un ustensile muni d'un objet magnétique ;
- un dispositif de localisation, comportant une mémoire contenant une valeur enregistrée de la distance D₁ entre l'objet magnétique et la pointe, et adapté à déterminer le vecteur d'état X_{A} représentatif de la position P_{A} et de l'orientation de l'objet magnétique, et à déterminer une position P_{P} de la pointe de l'ustensile en tenant compte de la valeur enregistrée de la distance D₁ ;
- un capteur tactile ayant une surface de référence, adapté à détecter le contact de la pointe sur la surface de référence ;
- une interface graphique, lorsqu'on souhaite afficher la position de la pointe ou une autre position issue de la position de la pointe, notamment lors d'une phase de non-contact.

Le dispositif de localisation est équipé d'un réseau de magnétomètres pour mesurer le champ magnétique ambiant dont la contribution générée par l'objet magnétique. Par ailleurs, le capteur tactile est dit 'tactile' dans la mesure où il est adapté à détecter le contact de la pointe de l'ustensile sur la surface de référence. Il est alors adapté à fournir un signal électrique de réponse représentatif du contact éventuel de la pointe de l'ustensile sur la surface de référence. Le capteur tactile peut être de type capacitif ou de type résistif, par exemple piézorésistif. Plus largement, le capteur tactile présente un paramètre qui varie en fonction du contact de la pointe sur la surface de référence, et éventuellement de la force d'appui exercée. Ce paramètre peut être une capacité, une résistance électrique, une tension électrique, etc. Le capteur tactile peut être 'matriciel' lorsqu'il comporte une matrice de pixels distincts les uns des autres formée par des pistes conductrices disposées en lignes et colonnes. Chaque pixel est alors adapté à fournir un signal de réponse.

Le système de suivi peut trouver une application dans la numérisation d'un dessin ou d'une écriture, qui consiste alors au relevé et à l'enregistrement d'une trace effectuée par la pointe de l'ustensile sur la surface de référence. Par relevé de la trace effectuée par la pointe de l'ustensile, on entend la détermination et l'enregistrement des positions successives de la pointe de l'ustensile lorsqu'elle est au contact de la surface de référence. Il peut également trouver une application, entre autres, dans les interfaces homme-machine, par exemple pour interagir avec des objets numériques 2D ou 3D affichés par l'interface graphique.

Comme explicité plus loin, le procédé et le système de suivi de la pointe de l'ustensile sont adaptés, lors d'une phase de contact de la pointe sur la surface de référence, à déterminer la valeur effective D₁₍ₖ₊₁₎ de la distance D₁ entre l'objet magnétique et la pointe de l'ustensile, suivant l'axe longitudinal de celui-ci, et à mettre à jour la valeur enregistrée de cette distance D₁ dans une unité de calcul en remplaçant la valeur enregistrée préalable D₁₍ₖ₎ par la valeur effective déterminée D₁₍ₖ₊₁₎. Ces étapes de détermination de la valeur effective D₁₍ₖ₊₁₎ de la distance D₁ et de mise à jour de la valeur enregistrée forment une recalibration de la distance D₁ entre la pointe et l'objet magnétique.

Dans le cadre de l'invention, la position de l'objet magnétique vis-à-vis de la pointe (et donc la distance D₁) est modifiée lors de la manipulation de l'ustensile, par translation de l'objet magnétique le long de l'axe longitudinal Δ de l'ustensile, alors que l'ustensile et donc la pointe en question n'est pas au contact de la surface de référence. C'est lorsque le capteur tactile détecte un contact de la pointe sur la surface de référence que la recalibration de la distance D₁ est effectuée.

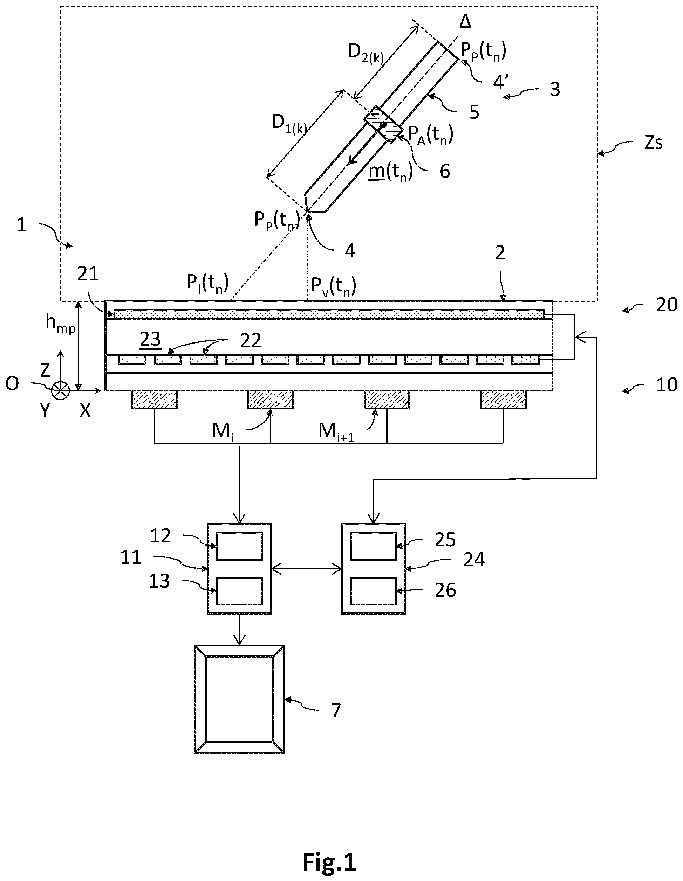

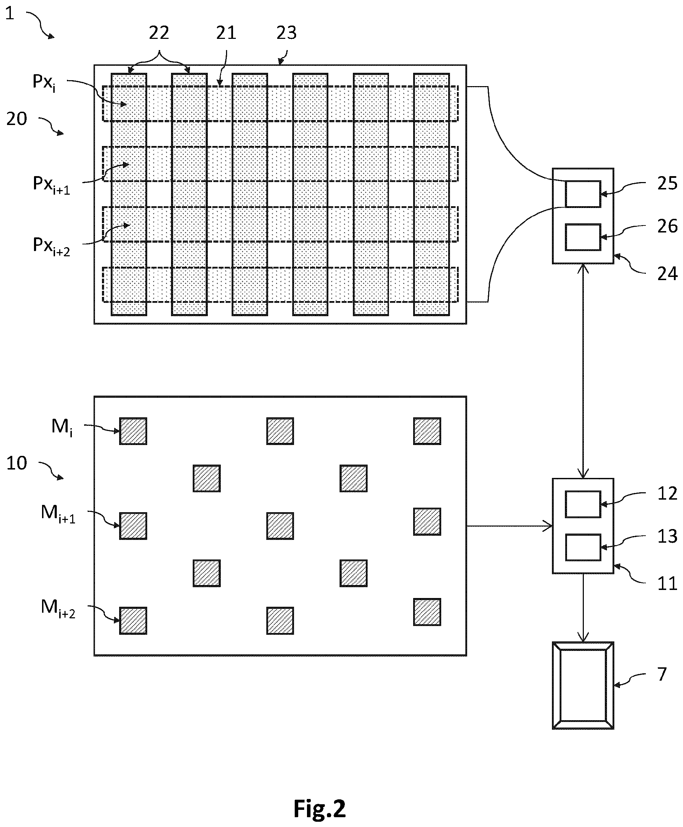

Les figures 1 et 2 sont des vues schématiques et partielles, respectivement en coupe et en vue éclatée, d'un système de suivi 1 d'une pointe 4 d'un ustensile 3 selon un mode de réalisation. Dans cet exemple, l'ustensile 3 est un stylet dont une première extrémité 4 (ici une pointe) est destinée à venir au contact de la surface de référence 2. Par ailleurs, le capteur tactile 20 est un capteur matriciel de pression résistif, qui est alors adapté, outre de détecter le contact de la pointe 4 sur la surface de référence 2, d'en mesurer la force d'appui (également appelée force de pression). Cependant, comme mentionné précédemment, le capteur tactile 20 peut ne pas être matriciel.

La surface de référence 2 peut être la surface d'une couche de protection du capteur tactile 20 décrit en détail plus loin. Il peut également s'agir de la surface d'un élément rapporté et disposé sur une surface d'appui du capteur tactile 20, cet élément étant adapté à transmettre la force de pression exercée par la pointe 4 du stylet 3 au capteur tactile 20. Un tel élément peut être, par exemple, une ou plusieurs feuilles de papier.

On définit ici et pour la suite de la description un repère direct tridimensionnel orthogonal OXYZ, où les axes X et Y forment un plan parallèle à la surface de référence 2, et où l'axe Z est orienté vers l'ustensile 3. Dans cet exemple, l'origine O est situé en bordure d'une zone de suivi Zs de l'objet magnétique 6, et dans un plan passant par le réseau de magnétomètres, mais elle peut être située ailleurs dans la zone de suivi Zs, par exemple en bordure et dans le plan de la surface de référence 2.

L'ustensile 3 est un objet destiné à être manipulé par un utilisateur, par exemple à la main. Il comporte une structure rigide 5 (corps) réalisée en un matériau de préférence non magnétique, par exemple du plastique, laquelle présente une pointe 4 destinée à venir au contact de la surface de référence 2 du capteur tactile 20. Il peut s'agir d'un crayon au sens large, c'est-à-dire un stylo, stylet, feutre, pinceau ou tout autre organe d'écriture ou de dessin. La pointe 4 est, d'une manière générale, une extrémité de l'ustensile 3 suivant l'axe longitudinal Δ, et peut être pointue ou arrondie, rigide ou déformable. Par déformable, on entend ici faiblement déformable de sorte que, lors du contact de la point 4 sur la surface de référence 2, la déformation de la pointe 4 ne modifie sensiblement pas la valeur effective de la distance D entre l'aimant 6 et la point 4 suivant l'axe longitudinal Δ. Autrement dit, dans le cadre de l'invention, la modification de la valeur de la distance D est essentiellement due à la translation de l'aimant 6 suivant l'axe longitudinal Δ lors de la manipulation de l'ustensile 3 lors d'une phase de non-contact.

La structure rigide 5 du stylet 3 s'étend suivant un axe longitudinal Δ. Autrement dit, la structure rigide 5 comporte une partie avant (la pointe 4) destinée à venir au contact de la surface de référence 2, et une partie arrière, ces parties avant et arrière étant opposées l'une à l'autre suivant cet axe longitudinal Δ.

L'objet magnétique 6, ici un aimant permanent, est solidaire de la structure rigide 5 du stylet 3. L'objet magnétique 6 comporte un matériau présentant une aimantation, par exemple rémanente, pour lequel on définit un moment magnétique m. Il peut être un aimant permanent cylindrique, par exemple annulaire, tel qu'illustré dans le document WO2014/053526, voire un électroaimant. Il peut également s'agir d'un transpondeur adapté à réémettre un champ magnétique émis par un réseau de générateurs magnétiques. Cependant, dans cet exemple, l'objet magnétique 6 est un aimant permanent.

Le matériau magnétique est de préférence ferrimagnétique ou ferromagnétique. Il présente un moment magnétique spontané non nul même en l'absence d'un champ magnétique extérieur. Il peut présenter un champ magnétique coercitif supérieur à 100 A.m⁻¹ ou 500 A.m⁻¹ et l'intensité du moment magnétique est de préférence supérieure à 0,01 A.m² voire à 0,1 A.m², par exemple égale à 0,2 A.m² environ. On considère que l'objet magnétique 6 peut être approximé par un dipôle magnétique, mais d'autres modèles peuvent être utilisés. L'axe magnétique de l'objet magnétique 6 est défini comme étant l'axe colinéaire au moment magnétique m de l'objet magnétique 6. Le moment magnétique m est ici colinéaire avec l'axe longitudinal Δ du stylet 3.

L'aimant 6 est solidaire de la structure rigide 5 dans le sens où il ne peut se déplacer seul en translation suivant l'axe longitudinal Δ, mais il est possible que l'aimant 6 soit malgré tout déplacé en translation par l'utilisateur lors de la manipulation de l'ustensile 3 alors que celui-ci (et donc la pointe 4) n'est pas au contact de la surface de référence 2. Dans ce cas, la valeur effective de la distance D₁ entre l'aimant 6 et la pointe 4 suivant l'axe longitudinal Δ est alors modifiée par rapport à une valeur initiale D₁₍ₖ₌₀₎ préenregistrée dans l'unité de calcul 11 du système de suivi 1. Cette distance D₁ est définie comme étant la longueur suivant l'axe longitudinal Δ entre le centre barycentrique de l'aimant 6 et la pointe 4 du stylet 3. C'est pourquoi le procédé de suivi prévoit une phase de recalibration de la distance D₁.

L'aimant 6 est initialement disposé à une distance D₁₍ₖ₌₀₎ non nulle de la pointe 4 du stylet 3. Cette valeur initiale D₁₍ₖ₌₀₎ est connue et enregistrée dans la mémoire 13 de l'unité de calcul 11 du dispositif de localisation 10, avec un modèle numérique représentatif de l'ustensile 3 utilisé. Aussi, la connaissance de la position P_{A} et de l'orientation de l'aimant 6 dans le repère OXYZ, et la connaissance de la valeur enregistrée D₁₍ₖ₌₀₎ de la distance D₁, permettent d'en déduire la position Pₚ de la pointe 4 du stylet 3.

Cependant, dans la mesure où la valeur de cette distance D₁ peut varier dans le temps lors de la manipulation de l'ustensile 3 par l'utilisateur lors des phases de non-contact et donc présenter une valeur effective différente de la valeur initiale D₁₍ₖ₌₀₎, le procédé de suivi comporte une détermination de la valeur effective D₁₍ₖ₊₁₎, et une mise à jour de la distance D₁ dans l'unité de calcul 11 par remplacement de la valeur enregistrée préalable D₁₍ₖ₎ par la valeur effective déterminée D₁₍ₖ₊₁₎. La détermination ultérieure de la position P_{P} de la pointe 4 est effectuée à partir de la valeur enregistrée D₁₍ₖ₊₁₎ alors mise à jour. L'indicateur k est incrémenté d'une unité à chaque nouvelle phase de contact de la pointe 4 sur la surface de référence 2.

Le système de suivi 1 comporte également un dispositif de localisation 10, adapté à localiser l'aimant 6, c'est-à-dire à déterminer un vecteur d'état X_{A} représentatif de la position P_{A} et de l'orientation de l'aimant 6 dans le repère OXYZ, puis de déterminer la position P_{P} de la pointe 4 dans ce même repère à partir du vecteur d'état X_{A} et de la valeur enregistrée de la distance D aimant 6 - pointe 4. Il est également adapté à déterminer, lors d'une phase de contact détectée par le capteur tactile 20, la valeur effective D₁₍ₖ₊₁₎ de la distance D₁ entre l'aimant 6 et la pointe 4 et à mettre à jour la valeur enregistrée à partir de la valeur effective D₁₍ₖ₊₁₎ déterminée.

La position P_{P} dans le repère OXYZ ou une position P_{I} ou P_{V} peut ensuite être affichée sur l'interface graphique 7, notamment au cours des phases de non-contact. La position P_{I} est celle du point d'intersection entre la surface de référence 2 et une droite colinéaire au moment magnétique de l'aimant 6 et donc passant par la pointe 4. La position P_{V} est la projection sur la surface de référence 2, suivant l'axe Z, de la position P_{P}. L'affichage de la position P_{P} peut être fait par exemple dans le cas d'une représentation tridimensionnelle d'un espace virtuel contenant des objets numériques à manipuler (interface homme-machine). L'affichage de la position P_{V} et/ou de la position P_{I} peut se faire par exemple dans le cas d'un affichage d'un curseur sur une représentation bidimensionnelle de la surface de référence 2 dans le cadre du relevé de la trace.

Par localiser l'aimant 6, on entend déterminer la position P_{A} et l'orientation de l'aimant 6 dans la zone de suivi Zs sous la forme d'un vecteur d'état X_{A}. La position P_{A} de l'aimant 6 correspond ici aux coordonnées du centre géométrique de l'aimant 6, c'est-à-dire au barycentre non pondéré de l'ensemble des points de l'aimant 6. Par ailleurs, le moment magnétique m de l'aimant 6 est un vecteur dont les composantes sont (mₓ, m_{y}, m_{z}) dans le repère réel OXYZ. Sa norme, également appelée intensité ou amplitude, est notée ||m|| ou m. Il est colinéaire à l'axe longitudinal Δ et passe donc par la pointe 4 du stylet 3.

L'aimant 6 est destiné à évoluer dans la zone de suivi Zs. Celle-ci est un espace dans lequel le rapport signal sur bruit SNR (pour *Signal to Noise Ratio,* en anglais) d'au moins l'un des magnétomètres du dispositif de localisation 10 est supérieur ou égal à une valeur seuil prédéfinie. A titre d'exemple, la zone de suivi Zs peut être un espace dans lequel le signal, c'est-à-dire la norme ou au moins une composante du champ magnétique généré par l'aimant 6 et mesuré par le magnétomètre correspondant, est supérieure ou égale à, par exemple, 20 fois le bruit. Le bruit associé à chaque magnétomètre peut être égal à 0,2µT environ. Dans ce cas, la zone de suivi Zs correspond à une zone de l'espace dans laquelle le champ magnétique généré par l'aimant 6 et mesuré par au moins l'un des magnétomètres Mᵢ est supérieur ou égal à 6µT environ, ce qui correspond à une distance dₘₐₓ égale à 20cm environ suivant l'axe directeur passant par le magnétomètre Mᵢ considéré. Plus simplement, la zone de suivi Zs peut être définie comme un espace dans lequel chaque point est à une distance inférieure ou égale à une distance maximale dₘₐₓ selon l'axe directeur passant par le magnétomètre Mᵢ le plus proche, celle-ci étant par exemple égale à 20cm, voire à 10cm, ou encore à 5cm.

Le dispositif de localisation 10 est apte à mesurer le champ magnétique ambiant, dont l'une des contributions est le champ magnétique généré par l'aimant 6, à différents instants de mesure, au cours d'une durée T de suivi, dans le repère OXYZ, et ensuite à estimer la position P_{A} et l'orientation de l'aimant 6 sur la base des mesures des magnétomètres Mᵢ, et enfin à déterminer la position P_{P} de la pointe 4 de l'aimant 6 dans le repère OXYZ.

Pour cela, il comporte un réseau de magnétomètres Mᵢ solidaires ici sans degré de liberté d'une face arrière du capteur tactile 20. Le nombre de magnétomètres Mᵢ peut être, par exemple supérieur ou égal à 2, de préférence supérieur ou égal à 16, par exemple égal à 25 environ, notamment lorsqu'il s'agit de magnétomètres triaxes. Le réseau de magnétomètres Mᵢ comporte cependant au moins trois axes de mesure distants les uns des autres et non parallèles deux à deux. Les magnétomètres Mᵢ peuvent être alignés lignes et colonnes, ou peuvent être positionnés mutuellement de manière sensiblement aléatoire. Les positions des magnétomètres Mᵢ sont connues. Par exemple, elles peuvent être comprises entre 1cm et 10cm, par exemple 5cm.

Les magnétomètres Mᵢ présentent chacun au moins un axe de mesure, par exemple trois axes, notés xᵢ, yᵢ, zᵢ. Chaque magnétomètre mesure donc l'amplitude et la direction du champ magnétique ambiant Bᵢ dont une contribution est générée par l'aimant 6. Plus précisément, chaque magnétomètre Mᵢ mesure la norme de la projection orthogonale du champ magnétique ambiant Bᵢ suivant les axes xᵢ, yᵢ, zᵢ du magnétomètre. Un paramètre de calibration des magnétomètres Mᵢ peut être le bruit associé aux magnétomètres, ici de l'ordre de 0,2µT. Par champ magnétique ambiant B, on entend le champ magnétique non perturbé par un quelconque élément magnétique, formé notamment d'une contribution terrestre B^{terr} de l'ordre de 50µT, auquel s'ajoute le champ magnétique B^{a} généré par l'aimant 6. D'autres contributions magnétiques peuvent s'ajouter, comme une contribution associée au bruit des capteurs et une contribution liée à une erreur de décalage (*offset,* en anglais), lesquelles sont négligées ici.

Le dispositif de localisation 10 comporte en outre une unité de calcul 11 apte à :
- déterminer le vecteur d'état X_{A} (position P_{A} et orientation de l'aimant 6 dans le repère OXYZ), à partir des mesures des magnétomètres Mᵢ ;
- déterminer la position P_{P} de la pointe 4 du stylet 3 dans le repère OXYZ, à partir du vecteur d'état X_{A} et de la distance enregistrée D entre l'aimant 6 et la pointe 4 ;
- déterminer, lorsque le contact de la pointe 4 sur la surface de référence 2 a été détecté par le capteur tactile 20, la valeur effective D₁₍ₖ₊₁₎ de la distance D₁ entre l'aimant 6 et la pointe 4, et à mettre à jour la valeur enregistrée de cette distance D₁.

Pour cela, chaque magnétomètre Mᵢ est électriquement connecté à l'unité de calcul 11 par un bus de transmission d'informations (non représenté). L'unité de calcul 11 comporte un processeur 12 programmable 12 apte à exécuter des instructions enregistrées sur un support d'enregistrement d'informations. Elle comporte en outre une mémoire 13 contenant les instructions nécessaires pour la mise en œuvre de la localisation de l'aimant 6, ainsi que le modèle numérique de l'ustensile 3 utilisé, permettant de fournir la position Pₚ de la pointe 4 du stylet 3 dans le repère OXYZ à partir du vecteur d'état X_{A}. Elle contient donc une valeur initiale D₁₍ₖ₌₀₎ de la distance D1 entre l'aimant 6 et la pointe 4, cette valeur étant ensuite mise à jour à chaque nouvelle phase de contact et enregistrée dans l'unité de calcul 11 (elle est alors notée D₁₍₁₊₁₎). De préférence, la valeur initiale D₁₍ₖ₌₀₎ est faible par rapport à la longueur du stylet 3, de sorte que l'aimant 6 est initialement positionné à proximité de la pointe 4. Elle peut ainsi être sensiblement égale à la demilongueur de l'aimant 6. La mémoire 13 est également adaptée à stocker les informations calculées à chaque instant de mesure. L'unité de calcul 11 est connectée à l'interface graphique 7 pour afficher la position P_{P} ou une position projetée P_{I} ou P_{V}.

L'unité de calcul 11 implémente un modèle mathématique associant la position de l'aimant 6 dans le repère OXYZ, ainsi que l'orientation et l'intensité de son moment magnétique m, aux mesures des magnétomètres Mᵢ. Ce modèle mathématique est construit à partir des équations de l'électromagnétisme, en particulier de la magnétostatique, et est paramétré notamment par les positions et orientations des magnétomètres dans le repère OXYZ. Ici, ce modèle est non linéaire. L'unité de calcul 11 met en œuvre un algorithme d'estimation de sa solution tel que, par exemple, un filtrage bayésien (par ex. filtre de Kalman étendu) ou une optimisation, voire tout autre algorithme du même type.

De préférence, pour pouvoir approximer l'aimant 6 à un dipôle magnétique, la distance entre l'aimant 6 et chaque magnétomètre Mᵢ est supérieure à 2, voire 3 fois la plus grande dimension de l'aimant 6. Cette dimension peut être inférieure à 20cm, voire inférieure à 10cm, voire à 5cm. L'aimant 6 peut être modélisé par un modèle dipolaire, entre autres, en fonction notamment de la distance entre l'aimant 6 et chaque magnétomètre Mᵢ du réseau.

Le système de suivi 1 comporte un capteur tactile 20, ici un capteur matriciel de pression. Il est adapté à détecter le contact de la pointe 4 du stylet 3 sur la surface de référence 2 à partir ici de la mesure de l'intensité de la force de pression exercée sur cette surface de référence 2, et à transmettre cette information au dispositif de localisation 10. Ainsi, à partir de cette information, le système de suivi 1 détermine si la manipulation du stylet 3 est dans une phase de contact de la pointe 4 avec la surface de référence 2 ou dans une phase de non-contact.

Le capteur tactile 20 comporte ici une matrice de pression, formée d'une pluralité de pixels Pxᵢ sensibles à la pression exercée sur sa surface. La matrice de pression est dans cet exemple de type résistif. Un tel capteur est également appelé capteur de force résistif (*Force-Sensing Resistor,* en anglais).

Il est formé d'un film 23 réalisé en un matériau piézorésistif, c'est-à-dire en un matériau dont la résistance électrique locale varie en fonction de la contrainte mécanique exercée, par exemple en un polymère conducteur. Le matériau sensible du film peut être continu dans le plan XY ou peut être pixellisé. Des pistes conductrices 21, 22 sont formées en lignes sur une face du film et en colonnes sur la face opposée. Les pixels Pxᵢ sont formés par l'intersection, en vue de dessus, entre les lignes et les colonnes des pistes conductrices. Les pixels Pxᵢ peuvent être accolés les uns aux autres, voire être espacés les uns des autres (comme illustré sur la fig.2).

Le capteur tactile 20 comporte ici un nombre N de pixels Pxᵢ, par exemple égal à 2500 environ. Les pistes conductrices 21, 22 peuvent présenter une largeur de quelques millimètres, par exemple 2.5mm, de sorte qu'un pixel présente ici une surface de 2.5×2.5mm². Les pixels Pxᵢ sont distincts et sont espacés dans le plan XY les uns des autres par exemple d'une distance de 1mm environ. Le diamètre de la pointe 4 du stylet 3 au contact de la surface de référence 2 peut être ici de l'ordre du millimètre, par exemple compris entre 1mm et 3mm environ.

Le capteur tactile 20 comporte une unité de traitement 24, comportant, par exemple, un microcontrôleur 25 assurant la commande et la lecture des différents pixels de la matrice de pression, et un calculateur 26 adapté à détecter le contact de la pointe 4 sur la base des signaux électriques de réponse émis par les pixels. Le microcontrôleur est ainsi adapté à transmettre un signal électrique de commande à chacun des pixels, et à recevoir un signal électrique de réponse, celui-ci étant représentatif d'un contact éventuel de la pointe 4 du stylet 3 sur la surface de référence 2. L'unité de traitement comporte les coordonnées des N pixels Pxᵢ dans le repère OXYZ.

Le calculateur 26, à partir d'au moins un signal électrique de réponse, détecte s'il y a contact ou non de la pointe 4 sur la surface de référence 2. Pour cela, l'intensité du signal électrique émis par chaque pixel interrogé ou, par exemple, une combinaison de l'intensité du signal électrique issu de chacun des pixels interrogés, présente une valeur qui, lorsqu'elle est supérieure à un seuil prédéterminé, correspond au contact de la pointe 4 sur la surface de référence 2. L'intensité de la force de pression exercée par la pointe 4 est dépendante de l'intensité des signaux électriques émis par un ou plusieurs pixels.

Dans le cas d'un relevé de la trace, l'unité de calcul 11 du dispositif de localisation 10 enregistre alors les positions Pₚ(tₙ) successives de la pointe 4 au contact de la surface de référence 2, déterminées par le dispositif de localisation 10, lorsque le contact a été détecté par le capteur tactile 20, qui forment ainsi ou participent à former une partie de la trace de l'ustensile 3 sur la surface de référence 2. L'ensemble des parties « relevées », en tenant compte des discontinuités (phases de non-contact), forme la trace du stylet sur la surface de référence. La position P_{P} coïncide alors sensiblement avec les positions projetées P_{I} et P_{V}. L'intensité de la force de pression exercée (lorsqu'elle est supérieure à la valeur seuil de détection du contact) permet de fournir une caractéristique supplémentaire de la trace de l'ustensile 3, et peut être utilisée pour faire varier par exemple la largeur de la trace de l'ustensile 3.

L'unité de traitement 24 peut ainsi comporter un microcontrôleur 25 pour le pilotage de l'alimentation électrique des pixels, associés à des convertisseurs analogique-numérique CAN, et son calculateur 26 comporte au moins un processeur et au moins une mémoire contenant les instructions nécessaires pour la mise en œuvre de la détection du contact de la pointe 4 et de la mesure de la force de pression, et pour stocker les informations calculées à chaque instant de mesure, et ici des convertisseurs. Bien entendu, le processeur et la mémoire du calculateur 26 peuvent être communs ou non avec ceux du microcontrôleur 25, et/ou avec ceux du dispositif de localisation 10.

Comme détaillé plus loin, le stylet 3 est destiné à être manipulé par l'utilisateur dans une zone de suivi Zs. A chaque instant de mesure, la position P_{P} de la pointe 4 du stylet 3 peut être représentée sur l'interface graphique 7. Cette manipulation comporte l'alternance de phases de non-contact et des phases de contact de la pointe 4 sur la surface de référence 2 :
- lors d'une première phase de non-contact, la pointe 4 du stylet 3 n'est pas au contact de la surface de référence 2. La position P_{P} de la pointe 4 est alors déterminée par le dispositif de localisation 10 à partir du vecteur d'état X_{A} (position P_{A} et orientation) de l'aimant 6, et à partir de la valeur initiale D₁₍ₖ₌₀₎ de la distance D₁ entre l'aimant 6 et la pointe 4 préenregistrée dans l'unité de calcul 11 du dispositif de localisation 10. La position P_{P} de la pointe 4 dans le repère OXYZ ou une position projetée P_{I} ou P_{V} sur la surface de référence 2 peut être représentée en temps réel sur l'interface graphique 7 ;
- lors d'une première phase de contact, l'utilisateur amène la pointe 4 du stylet 3 au contact de la surface de référence 2. Le capteur tactile 20 détecte alors le contact, et l'indicateur k est incrémenté d'une unité : k+1. La valeur effective D₁₍ₖ₊₁₎ de la distance D₁ est alors déterminée et la valeur enregistrée de la distance D₁ est alors mise à jour. La position P_{P} de la pointe 4 est déterminée à partir du vecteur d'état X_{A} à l'instant courant et à partir de la valeur mise à jour Dₖ₊₁ de la distance D₁ entre l'aimant 6 et la pointe 4 ;
- lors d'une phase de non-contact qui suit la première phase de contact, la position P_{P} de la pointe 4 est alors déterminée à partir du vecteur d'état X_{A} à l'instant courant et à partir de la valeur déjà mise à jour D₁₍ₖ₊₁₎ de la distance D₁ entre l'aimant 6 et la pointe 4.

L'incrément k augmente d'une unité à chaque nouvelle phase de contact. Une phase de contact est définie comme étant la période comportant un ou plusieurs instants de mesure consécutifs pendant laquelle la pointe 4 du stylet 3 est en contact continu avec la surface de référence 2. Le système de suivi 1 peut ainsi détecter l'instant initial du premier contact de la pointe 4 sur la surface de référence 2 définissant le début d'une phase de contact, ainsi que l'instant final correspondant à la rupture de contact et définissant la fin de la phase de contact.

Ainsi, le système de suivi 1, par la combinaison du dispositif de localisation 10 et du capteur tactile 20, permet de mettre à profit le contact de la pointe 4 sur la surface de référence 2 pour déterminer la valeur effective D₁₍ₖ₊₁₎ de la distance D₁ entre l'aimant 6 et la pointe 4, et mettre à jour la valeur enregistrée de cette distance D₁ par remplacement de la valeur enregistrée (D₁₍ₖ₎) préalable par la valeur effective (D₁₍ₖ₊₁₎) déterminée. Ainsi, lors de chaque phase de non-contact faisant suite à une phase de contact, la position P_{P} de la pointe 4 est déterminée en prenant en compte la valeur effective D₁₍ₖ₊₁₎ enregistrée de la distance D₁ entre l'aimant 6 et la pointe 4 qui a été déterminée lors de la phase de contact précédente. On limite ainsi les erreurs dans la détermination de la position de la pointe 4, liées à un déplacement involontaire de l'aimant 6 par l'utilisateur. La précision de la localisation de la position P_{P} de la pointe 4 de l'aimant 6 est alors améliorée.

Par ailleurs, le contact de la pointe 4 est détecté avec précision par le capteur tactile 20, et la position de la pointe 4 est déterminée avec une résolution élevée par le dispositif de localisation 10. La position de la pointe 4 n'est ainsi pas impactée par la résolution potentiellement faible des capteurs tactiles classiques, notamment des capteurs matriciels dont la résolution dépend des dimensions et de l'agencement des pistes conductrices. De plus, la détermination d'une position projetée P_{I} ou P_{V} sur la surface d'écriture, le cas échéant, n'est pas perturbée par les contacts parasites éventuels, tels que le contact du doigt ou celui de la paume de la main de l'utilisateur sur la surface de référence 2.

Par ailleurs, le système de suivi 1 peut présenter une latence liée à la commande/lecture de la matrice de pixels particulièrement réduite, dans la mesure où seuls le ou les pixels les plus proches de la position projetée P_{I} ou P_{V} peuvent être activés par le microcontrôleur, et non pas tous les pixels de la matrice. La fréquence de commande/lecture peut alors être particulièrement élevée. En conséquence, la consommation électrique du système de suivi 1 est diminuée. De plus, il est avantageux que le capteur tactile 20 reste au moins en partie inactif lors du suivi de l'objet magnétique 6 par le dispositif de localisation 10, notamment lorsque la position P_{P} de la pointe 4 suivant l'axe Z est supérieure à une valeur seuil P_{P,th}.

Par ailleurs, il est possible d'utiliser un capteur tactile 20 dont le microcontrôleur et les connectiques électriques sont simples et classiques. On évite ainsi d'avoir à utiliser un microcontrôleur et des connectiques particulières liés à la nécessité d'activer les lignes et/ou les colonnes de manière soit individuelle et séquentielle, soit collective.

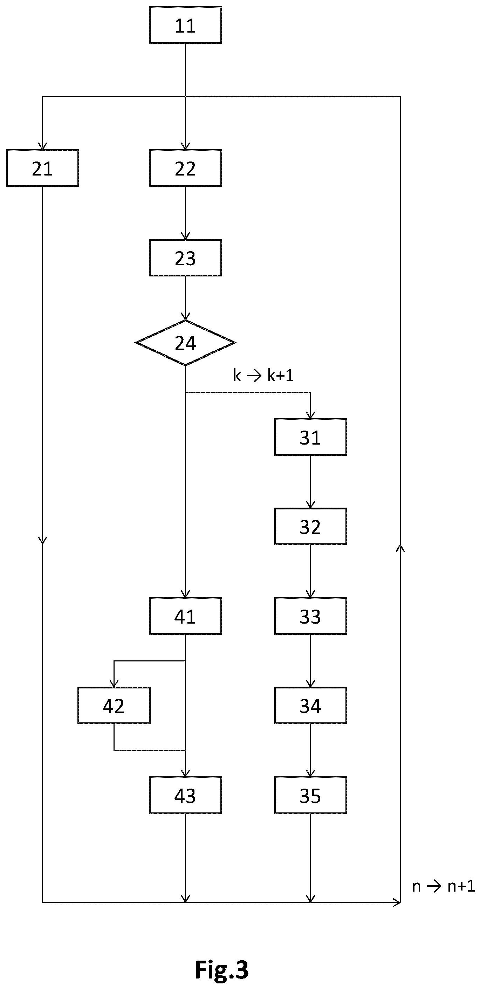

La figure 3 est un organigramme illustrant un procédé de suivi de l'ustensile 3 selon un mode de réalisation. Dans cet exemple, le système de suivi 1 est identique à celui décrit en référence aux fig.1 et 2. Dans cet exemple, le capteur tactile 20 est activé quelle que soit la hauteur de la pointe 4 vis-à-vis de la surface de référence 2, et l'ensemble des pixels est interrogé. Comme décrit plus loin, en variante, le capteur tactile 20 peut n'être activé que lorsque la position P_{P} de la pointe 4 suivant l'axe Z est inférieure à une valeur seuil, et seuls le ou les pixels les plus proches d'une position projetée P_{I} ou P_{V} sur la surface de référence 2 peuvent être activés pour détecter le contact.

Lors d'une première étape 11, on enregistre un modèle numérique du stylet 3 dans la mémoire de l'unité de calcul 11 du dispositif de localisation 10. Ce modèle numérique comporte la valeur initiale D₁₍ₖ₌₀₎ de la distance D₁ entre l'aimant 6 et la pointe 4. Cette valeur enregistrée est destinée à être mise à jour lors de chaque phase de contact de la pointe 4 sur la surface de référence 2. Elle permet de déterminer, avant la première phase de contact, la position P_{P} de la pointe 4 du stylet 3 dans le repère OXYZ à partir du vecteur d'état X_{A} de l'aimant 6. Cette étape comporte également l'enregistrement des coordonnées de la surface de référence 2 dans le repère OXYZ, et l'enregistrement des coordonnées des pixels du capteur tactile 20.

Lors d'une étape 21, l'utilisateur manipule le stylet 3 dans la zone de suivi Zs, c'est-à-dire qu'il en modifie la position et éventuellement l'orientation dans le repère OXYZ. Lors de la manipulation du stylet 3, il y a ici une alternance de phases de contact et de non-contact de la pointe 4 sur la surface de référence 2. Lors d'une phase de non-contact, l'aimant 6 est déplacé (par exemple de manière involontaire par l'utilisateur) par translation suivant l'axe longitudinal Δ de sorte que la valeur effective de la distance D₁ est différente de la valeur enregistrée D₁₍ₖ₌₀₎.

Les étapes suivantes 22 à 43 sont effectuées de manière itérative à un instant de mesure tₙ, le temps étant discrétisé à une fréquence d'échantillonnage déterminée, par exemple 140Hz. A chaque itération de rang n est associé un instant de mesure tₙ, également appelé instant courant. Par ailleurs, lors de chaque nouvelle phase de contact, l'indicateur k est incrémenté d'une unité.

Lors d'une étape 22, les magnétomètres mesurent le champ magnétique ambiant à l'instant courant tₙ, et notamment la contribution du champ magnétique ambiant générée par l'aimant 6 solidaire du stylet 3.

Lors d'une étape 23, l'unité de calcul 11 reçoit les mesures du champ magnétique ambiant, en déduit la contribution du champ magnétique généré par l'aimant 6, et détermine le vecteur d'état X_{A}(tₙ) associé à l'aimant 6 à l'instant courant tₙ dans le repère OXYZ. Le vecteur d'état X_{A}(tₙ) comporte la position et l'orientation de l'aimant 6 dans le repère OXYZ. Cette estimation du vecteur d'état X_{A} peut être effectuée à l'aide d'un algorithme d'estimation de la position et de l'orientation de l'aimant 6 de type bayésien, par exemple un filtre de Kalman étendu, ou à l'aide d'une méthode d'optimisation (descente de gradient...), ou à l'aide de tout autre algorithme du même type. Un exemple d'estimation d'un vecteur d'état associé à un aimant 6 est notamment décrit dans la demande WO2018/219891.

Par ailleurs, on attribue, pour la suite du procédé de suivi, une orientation +m ou -m à la pointe 4. Autrement dit, on détermine quelle orientation +m ou -m est dirigée vers la pointe 4. Pour cela, à titre d'exemple, l'utilisateur peut indiquer qu'il souhaite suivre et utiliser la pointe 4 du stylet 3, le stylet 3 pouvant alors être maintenu par l'utilisateur de sorte que la pointe 4 orientée vers la surface de référence 2. L'unité de calcul 11 détermine alors si le moment magnétique m est orienté vers la pointe 4 ou vers l'extrémité opposée 4', et attribue cette orientation (+m ou -m) à la pointe 4. Ainsi, connaissant l'orientation +m ou -m du moment magnétique m par rapport à la point 4, on sait si l'extrémité du stylet 3 au contact de la surface de référence est la pointe 4 ou l'extrémité opposée 4'. Dans la suite de la description, on considère que l'orientation +m du moment magnétique est dirigée vers la pointe 4.

Lors d'une étape 24, le capteur tactile 20 détermine s'il y a contact ou non de la pointe 4 sur la surface de référence 2. Dans cet exemple, toute la matrice de pixels est alors activée. Pour cela, l'unité de traitement détermine la valeur d'un paramètre κ(tₙ) représentatif du contact de la pointe 4 sur la surface de référence 2. Ce paramètre est ici l'intensité du signal électrique de réponse des pixels. Il peut s'agir de la résistance électrique des pixels, ou tout autre paramètre équivalent (intensité moyenne ou résistance moyenne d'un ensemble de pixels...). L'unité de traitement compare la valeur du paramètre κ(tₙ) à une valeur seuil prédéfinie κₜₕ et détecte le contact de la pointe 4 sur la surface de référence 2 comme étant réalisé lorsque la valeur du paramètre κ(tₙ) est supérieure ou égale à la valeur seuil κₜₕ. La valeur seuil κₜₕ permet de filtrer les fluctuations liées au bruit de mesure. Lorsque le contact est détecté, le procédé de suivi passe à l'étape 31, et lorsque ce n'est pas le cas, il continue avec l'étape 41.

Lors de l'étape 31, lorsque le contact est détecté par le capteur tactile 20, le dispositif de localisation 10 détermine la valeur effective D₁₍ₖ₊₁₎ de la distance D₁ entre l'aimant 6 et la pointe 4. Pour cela, le capteur tactile 20 a donc détecté un contact de la pointe 4 sur la surface de référence 2. Une phase de contact a donc lieu et cette information est transmise au dispositif de localisation 10. L'unité de calcul 11 incrémente alors l'indicateur k d'une unité : k+1. Cet indicateur garde ici la même valeur tant que l'on reste dans la même phase de contact.

Pour déterminer la valeur effective D₁₍ₖ₊₁₎ de la distance D₁, l'unité de calcul 11 détermine une valeur D_{1I(k+1)} de la distance dite projetée D_{1I} séparant la position P_{A} de l'aimant 6 et la position P_{I} du point I, le point I étant défini comme étant le point d'intersection entre la surface de référence 2 et la droite parallèle au moment magnétique m et passant donc par la pointe 4. Les coordonnées de la surface de référence 2 ont été enregistrées dans la mémoire de l'unité de calcul 11 lors de l'étape 11. Par ailleurs, on considère que le vecteur OP_{I} allant du point O au point P_{I} est la somme vectorielle du vecteur OP_{A} allant du point O au point P_{A} (centre de l'aimant 6) et du vecteur P_{A}P_{I}. A partir de la valeur déterminée D_{1I(k+1)} de la distance projetée D_{1I}, on détermine la valeur effective D₁₍ₖ₊₁₎ de la distance D₁, et on met à jour la valeur enregistrée dans l'unité de calcul.

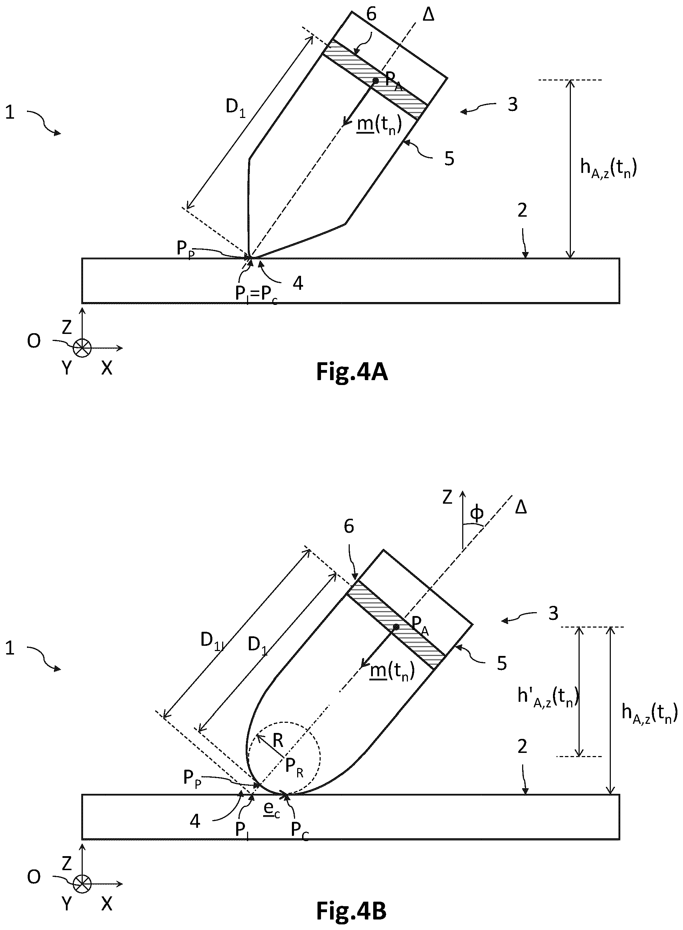

Deux situations peuvent se présenter lors d'une phase de contact, qui dépendent de la forme de la pointe 4. Une première situation est illustrée sur la figure 4A et correspond au cas où la pointe 4 présente une forme non courbe dans le sens où il y a coïncidence, lors du contact, entre la position P_{P} de l'extrémité de la pointe 4, la position P_{I} du point I, et la position P_{c} de contact. Notons que la pointe 4 peut présenter dans les faits une certaine courbure mais qui est suffisamment faible vis-à-vis de l'épaisseur du trait représenté pour que l'on considère qu'il y a coïncidence entre les trois positions. Une seconde situation est illustrée sur la figure 4B et correspond au cas où la pointe 4 présente une forme courbe dans le sens où il y a une non-coïncidence, lors du contact, entre la position P_{P} de l'extrémité de la pointe 4, la position P_{I} du point I, et la position P_{c} de contact.

Dans le cas de la première situation (fig.4A), la valeur effective D₁₍ₖ₊₁₎ de la distance D₁ est égale à la valeur de la distance projetée D₁. On peut écrire d'une manière générale : ∥P_{A}P_{I}(tₙ)∥ = h_{A,z}(tₙ) × ||m|| / m_{z}(tₙ), à la valeur absolue près. Autrement dit, à l'instant courant tₙ, la distance ∥P_{A}P_{I}∥ est égale à la hauteur h_{A,z} de la position P_{A} de l'aimant 6 vis-à-vis de la surface de référence 2 suivant l'axe Z, multipliée par la norme ||m|| du moment magnétique m divisée par la coordonnée m_{z} du moment magnétique m suivant l'axe Z. Or, lors d'une phase de contact, la valeur effective D₁₍ₖ₊₁₎(tₙ) de la distance D₁ (tout comme la valeur D_{1I(k+1)} de la distance projetée D_{1I}) est égale à ∥P_{A}P_{I}(tₙ)∥ : Dₖ₊₁(tₙ) = ∥P_{A}P_{I}(tₙ)∥.

On considère ici que la valeur de m_{z} est différente de zéro ou est supérieure d'un seuil prédéfini. Si ce n'est pas le cas, ces étapes peuvent ne pas être effectuées. On peut ainsi ne pas effectuer la détermination et mise à jour de la distance D₁ lorsque le moment magnétique présente un angle d'inclinaison ϕ supérieur à 60° vis-à-vis de l'axe Z. On limite ainsi les erreurs dans la détermination de la distance D₁. De plus, comme mentionné précédemment, on considère ici que l'orientation +m du moment magnétique m est dirigée vers la pointe 4.

Ainsi, l'unité de calcul 11 détermine h_{A,z}(tₙ) à partir de la position P_{A} de l'aimant 6 dans le repère OXYZ déterminée préalablement lors de l'étape 23 (détermination du vecteur d'état Xₐ(tₙ)), et à partir des coordonnées dans le repère OXYZ de la surface de référence 2. Elle détermine également la norme ||m|| du moment magnétique m. Elle calcule donc la distance ∥P_{A}P_{I}(tₙ)∥, c'est-à-dire la valeur D_{1I(k+1)}(tₙ) de la distance D_{1I}, et par là même la valeur effective D₁₍ₖ₊₁₎(tₙ) de la distance D₁ entre l'aimant 6 et la pointe 4.

Lors d'une étape 32, l'unité de calcul 11 met à jour la valeur enregistrée de la distance D₁ entre l'aimant 6 et la pointe 4 dans la mémoire 13 par remplacement de la valeur D₁₍ₖ₎ par la valeur effective D₁₍ₖ₊₁₎. Cette valeur enregistrée peut ainsi être une valeur instantanée (par ex, la plus récente) ou être une valeur moyenne des différentes valeurs de la distance Dₖ₊₁ déterminées lors d'une même phase de contact. D'autres approches sont possibles : il est possible par exemple de calculer la moyenne en pondérant les différentes valeurs déterminées de D₁₍ₖ₊₁₎ en fonction de l'inclinaison du stylet 3. Ainsi, un poids plus important peut être attribué aux valeurs déterminées de D₁₍ₖ₊₁₎ lorsque le stylet 3 forme un angle sensiblement orthogonal à la surface de référence 2.

Lors de l'étape 33, l'unité de calcul 11 détermine la position P_{P}(tₙ) de la pointe 4 sur la surface de référence 2 à l'instant courant, à partir du vecteur d'état X_{A}(tₙ) déterminé préalablement, et à partir de la distance D₁₍ₖ₊₁₎ mise à jour de la distance D₁. Pour cela, l'unité de calcul 11 détermine le vecteur P_{A}P_{I}(tₙ) à partir de la distance D₁₍ₖ₊₁₎ mise à jour et à partir du moment magnétique m(tₙ) : P_{A}P_{I}(tₙ) = D₁₍ₖ₊₁₎ × m(tₙ) / ∥m∥. Comme mentionné précédemment, on considère ici que l'orientation +m du moment magnétique m est dirigée vers la pointe 4. Ensuite, la position Pₚ(tₙ) de la pointe 4 au contact de la surface de référence 2 est déterminée à partir du vecteur P_{A}P_{I}(tₙ) et du vecteur OP_{A}(tₙ) : OPₚ(tₙ) = OP_{I}(tₙ) = OP_{A}(tₙ) + P_{A}P_{I}(tₙ).

Lors de l'étape 34, l'unité de calcul 11 enregistre la position P_{P}(tₙ). Dans le cas d'une application de relevé de la trace, les positions successives P_{P}(tₙ) enregistrées par l'unité de calcul 11 au cours de la phase de contact forment ou participent à former la trace effectuée par le stylet 3 sur la surface de référence 2.

En variante, la position P_{P} de la pointe 4 au contact de la surface de référence 2, telle qu'enregistrée par l'unité de calcul 11, peut dépendre à la fois de la position déterminée par le dispositif de localisation 10 (la position P_{I}), et d'une position P_{P,cp} déterminée fournie par le capteur tactile 20. Ainsi, la position P_{P,cp}(tₙ) peut correspondre à la position du centroïde (barycentre pondéré) des efforts de pression exercés par la pointe 4 sur la surface de référence 2, et mesurés par les pixels interrogés. La position de la pointe 4 au contact de la surface de référence 2 enregistrée par l'unité de calcul 11 peut être la moyenne, pondérée ou non en fonction de la perturbation magnétique, de la position P_{P} déterminée par le dispositif de localisation 10 et de la position P_{P,cp} déterminée par le capteur tactile 20.

Lors d'une étape 35, l'unité de calcul 11 commande l'interface graphique 7 pour afficher la position P_{P}(tₙ) de la pointe 4 (et le cas échéant de la trace).

Par ailleurs, lorsque le contact de la pointe 4 sur la surface de référence 2 n'est pas détecté, les étapes 41 à 43 sont effectuées.

Lors de l'étape 41, le dispositif de localisation 10 détermine la position P_{P}(tₙ) à partir du vecteur d'état X_{A}(tₙ) déterminé à l'étape 23 et à partir de la valeur D₁₍ₖ₎ enregistrée de la distance D₁ entre l'aimant 6 et la pointe 4. La distance D₁₍ₖ₎ est la valeur initiale D₁₍ₖ₌₀₎ lorsqu'il n'y a pas eu auparavant de phase de contact, ou est la valeur D₁₍ₖ₎ déterminée et mise à jour lors de la dernière phase de contact. La position P_{P}(tₙ) peut être déterminée de la manière suivante : OP_{P}(tₙ) = OP_{A}(tₙ) + D₁₍ₖ₎ × m(tₙ) / ∥m∥.

Lors de l'étape 42, le dispositif de localisation 10 détermine, si nécessaire, la position projetée P_{V}(tₙ) qui est la projetée de la position P_{P}(tₙ) de la pointe 4 sur la surface de référence 2 suivant l'axe Z. Cette position P_{V}(tₙ) peut correspondre à la position d'un curseur affiché sur l'interface graphique 7 dans le cas notamment d'un relevé de la trace. On peut choisir en variante de déterminer la position P_{I}(tₙ).

Lors de l'étape 43, le dispositif de localisation 10 commande l'interface graphique 7 pour afficher la position P_{P}(tₙ) dans le cas notamment d'une application du type interaction homme-machine et d'une représentation tridimensionnelle du stylet 3 ou équivalent, ou pour afficher la position Pᵥ(tₙ) ou la position P_{I}(tₙ) dans le cas notamment d'une application de relevé de la trace (voire la position projetée P_{I}).

Les étapes 22 à 43 sont réitérées à la fréquence d'échantillonnage définie, laquelle peut être constante ou non dans le temps, et qui peut notamment dépendre de la vitesse de déplacement de l'aimant 6 ou de la pointe 4, calculée par le dispositif de localisation 10 à partir du vecteur d'état X_{A}(tₙ). En particulier, la fréquence d'échantillonnage associée à la localisation de l'aimant 6 (par ex. 140 Hz) peut être identique ou différente de la fréquence de commande/lecture des pixels du capteur tactile 20.

Ainsi, le procédé de suivi permet de déterminer régulièrement, à chaque phase de contact, la valeur effective D₁₍ₖ₊₁₎ de la distance D₁ entre l'aimant 6 et la pointe 4 du stylet 3. Ainsi, la précision de la localisation de la position P_{P} de la pointe 4 de l'aimant 6 est alors améliorée. On limite ainsi les erreurs de localisation dans le cas où l'aimant 6 serait déplacé de sa position initiale correspondant à la distance D₀, et donc les erreurs de localisation de la pointe 4 du stylet 3.

La figure 4B est une vue schématique et partielle, en coupe, d'un ustensile 3 d'un système de suivi 1 selon une variante de réalisation, pour lequel la pointe 4 présente une forme arrondie. Dans cette seconde situation, il y a une non-coïncidence, lors du contact, entre la position P_{P} de l'extrémité de la pointe 4, la position P_{I} du point I, et la position P_{c} de contact.

Il apparaît que, lorsque la pointe 4 présente une forme courbe (circulaire, ovale ou autre), et que le moment magnétique m est incliné par rapport à l'axe Z d'un angle d'inclinaison ϕ non nul, la position P_{P} ne coïncide pas avec la position projetée P_{I}, et que le contact de la pointe 4 a lieu à la position de contact effectif P_{C} distincte de la position P_{I}. On considère ici que l'espacement entre les positions P_{I} et P_{C} est suffisamment important pour qu'il soit pris en considération, par exemple lorsqu'il est supérieur à l'épaisseur du trait représenté sur une interface graphique. Dans le cas contraire, on se replace dans le cas de la première situation décrite sur la fig.4A.

Dans ce cas où l'angle d'inclinaison ϕ que forme le moment magnétique m avec l'axe Z est non nul, la pointe 4 est formée de :
- une zone d'extrémité située dans le prolongement de l'axe longitudinal Δ, et où est définie la position P_{P} (située sur l'axe longitudinal Δ) ; et
- une zone de contact, distincte de la zone d'extrémité, au niveau de laquelle a lieu le contact avec la surface de référence 2, et où est définie la position de contact effectif P_{C}.

La position de contact effectif P_{c} peut être déterminée à partir de la position P_{I} déterminée préalablement lors de l'étape 33, et à partir d'informations relatives à la forme de la pointe 4 préenregistrées lors de l'étape 11. Dans cet exemple où la pointe 4 a une forme courbe circulaire, ces informations géométriques enregistrées relatives à la forme de la pointe 4 peuvent comporter la valeur d'un rayon R d'une sphère inscrite dans la surface de la pointe 4, et passant par le segment courbe [P_{P} ; P_{C}].

Ainsi, on peut calculer la valeur effective D₁₍ₖ₊₁₎ de la distance D₁ entre l'aimant 6 et la pointe 4 à partir du calcul de la valeur D_{1I(k+1)} de la distance projetée D_{1I} et des informations géométriques enregistrées de la pointe 4 (par ex. ici : forme circulaire de rayon R centrée en P_{R}) et de l'angle d'inclinaison ϕ formée par le moment magnétique m vis-à-vis de l'axe Z. Ainsi, à titre d'exemple, on peut tout d'abord calculer la distance ∥P_{A}P_{I}(tₙ)∥ et en déduire la position P_{I}(tₙ) (OP_{I} = OP_{A} + P_{A}P_{I}). Ensuite, on calcule la position P_{c}(tₙ) à partir ici de la position P_{I}(tₙ) déterminée, du calcul du vecteur e_{c} dont la norme est ici égale à e_{c} = Rxtan(ϕ) (la norme dépend des informations géométriques enregistrées de la forme de la pointe 4) et l'orientation correspond à la projection du moment magnétique m dans le plan XY. L'angle d'inclinaison ϕ est calculé à partir des coordonnées du moment magnétique m. Puis, la position Pₚ(tₙ) est calculée à partir notamment de la position P_{c}(tₙ) et des informations géométriques de la point 4 (et éventuellement de l'angle ϕ). Bien entendu, cet exemple est donné à titre illustratif, et il y a différentes possibilités pour déterminer la valeur effective D₁₍ₖ₊₁₎ de la distance D₁ à partir de la distance ∥P_{A}P_{I}(tₙ)∥ et des informations géométriques enregistrées de la forme de la pointe 4.

En variante et dans le cas particulier d'une point 4 de forme courbe et circulaire, on peut également calculer : ∥P_{A}P_{R}(tₙ)∥ = (h_{A,z}(tₙ)-R) × ||m|| / m_{z}(tₙ). On note h'_{A,z}(tₙ) la valeur h_{A,z}(tₙ) - R. Aussi, le calcul de ∥P_{A}P_{R}∥ correspond indirectement au calcul de ∥P_{A}P_{I}∥ et donc de la valeur D_{1I(k+1)} de la distance D_{1I}. Aussi, à l'instant courant tₙ, la distance ∥P_{A}P_{R}∥ du vecteur allant de la position P_{A} de l'aimant 6 à la position P_{R} du centre du cercle inscrit est égale à la distance h'_{A,z} de la position P_{A} de l'aimant 6 vis-à-vis d'un plan XY passant par la position P_{R}, multipliée par la norme ||m|| du moment magnétique m divisée par la coordonnée m_{z} du moment magnétique m suivant l'axe Z. La position P_{R} est déterminée ainsi : OP_{R} = OP_{A} + P_{A}P_{R}. Après avoir déterminé les coordonnées de la position P_{R} dans le repère OXYZ, on obtient alors directement la position dans le plan XY de la position de contact effectif P_{c} : il s'agit des coordonnées dans le plan XY de la position P_{R}.

D'autres approches sont possibles pour déterminer la position P_{C}, qui dépendent par exemple du modèle géométrique de la forme de la pointe 4 préenregistrée dans l'unité de calcul 11 lors de l'étape 11.

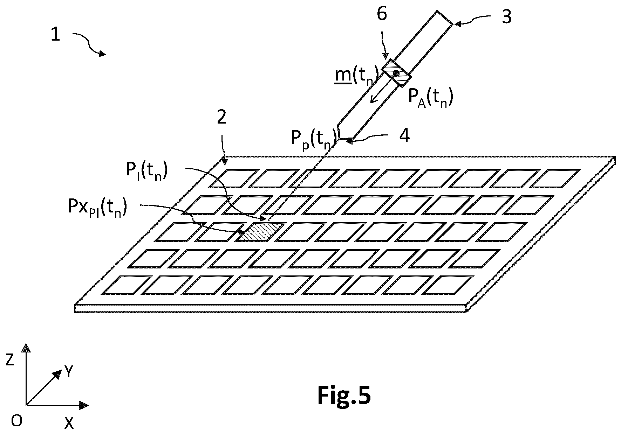

La figure 5 est une vue en perspective, schématique et partielle, d'un système de suivi 1 similaire à celui décrit en référence à la fig.1, dans lequel le capteur tactile 20 n'active que le ou les pixels Px_{PI}(tₙ) les plus proches de la position P_{I}(tₙ) du point d'intersection I, et ici lorsque la position P_{P} est inférieure ou égale, suivant l'axe Z, à une valeur seuil P_{P,th} prédéfinie.

Ainsi, l'unité de traitement du capteur tactile 20 reçoit ces données uniquement lorsque la position P_{P} de la pointe 4 suivant l'axe Z est inférieure ou égale à la valeur seuil P_{P,th}. Lorsque ce n'est pas le cas, le capteur tactile 20 peut être inactif, c'est-à-dire non alimenté électriquement totalement ou en partie, de manière à limiter la consommation électrique du système de suivi 1.

Lorsque la position P_{P} est, suivant l'axe Z, inférieure ou égale à la valeur seuil P_{P,th}, le capteur tactile 20 est rendu actif. Il reçoit alors la position projetée P_{I} ou P_{V} à l'instant courant (ici la position P_{I}), alors même que le contact n'est pas détecté.

L'unité de traitement détermine alors le ou les pixels Px_{PI} les plus proches de la position P_{I}. Seuls ces pixels sont alors activés par l'unité de traitement en vue de détecter le contact de la pointe 4 sur la surface de référence 2.

L'unité de traitement effectue alors la mesure uniquement du pixel le plus proche Px_{ref} et non pas de tous les pixels de la matrice. Le signal électrique de commande est donc transmis uniquement aux pixels les plus proches Px_{PI} alors que les autres pixels ne sont pas alimentés électriquement. Ensuite, le signal électrique de réponse est reçu par l'unité de traitement. Ainsi, la latence de commande/lecture des pixels est fortement réduite, dans la mesure où il s'agit de lire ici seulement quelques pixels pour chaque instant de mesure, et non pas ici 2500 pixels. En conséquence, la consommation électrique est également fortement réduite.

Selon un autre mode de réalisation, l'extrémité 4' du stylet 3, opposée à la pointe 4 suivant l'axe longitudinal Δ, peut également être fonctionnalisée et faire ainsi l'objet d'un suivi par le système de suivi 1. A titre d'exemple, le stylet 3 peut comporter une gomme à l'extrémité 4', ou une pointe d'écriture ayant des caractéristiques différentes de celles de la pointe 4. Aussi, cette extrémité 4' peut également être destinée à venir au contact de la surface de référence 2.

Comme l'illustre la fig.1, on note D₂ la distance entre l'aimant 6 et l'extrémité 4' suivant l'axe longitudinal Δ. Lorsque, au cours de l'utilisation du stylet 3, l'aimant 6 est déplacé vis-à-vis de sa position d'origine, et la distance D₂ présente alors une valeur effective différente de sa valeur initiale enregistrée.

Le procédé de suivi est alors adapté à assurer le suivi, en plus de la pointe 4, de l'extrémité 4' également. Le procédé est alors similaire à celui décrit précédemment en référence à la fig.3. Il s'en distingue essentiellement par les éléments suivants.

Lors de l'étape 11, le modèle numérique du stylet 3 enregistré dans l'unité de calcul 11 comporte, outre la valeur initiale D₁₍ₖ₌₀₎ de la distance aimant 6 - pointe 4, la valeur initiale D_{2(k'=0)} de la distance aimant 6 - extrémité 4'.

Lors de l'étape 21 de manipulation du stylet 3, il y a alternance entre des phases de contact et des phases de non-contact de l'une des extrémités 4 et 4' sur la surface de référence 2. Une phase de contact peut concerner la pointe 4, et la phase de contact suivante peut concerner l'extrémité 4' (ces deux phases de contact successives étant séparée par une phase de non-contact du stylet 3 sur la surface de référence 2).

Lors de l'étape 23, on attribue, pour la suite du procédé de suivi, une orientation du moment magnétique m à la pointe 4, et donc l'orientation opposée à l'extrémité opposée 4'. Cette étape peut être effectuée comme décrite précédemment. Il s'agit de déterminer quelle l'orientation +m ou -m du moment magnétique m est dirigée vers la pointe 4. Ainsi, connaissant l'orientation +m ou -m du moment magnétique m, on sait quelle est l'extrémité du stylet 3 au contact de la surface de référence 2.

Lors de l'étape 24, le capteur tactile 20 détecte le contact d'une extrémité du stylet 3 sur la surface de référence 2. La connaissance de l'orientation +m ou -m du moment magnétique m vis-à-vis de la pointe 4 permet de déterminer si l'extrémité en contact est la pointe 4 ou l'extrémité 4'. Ainsi, le système de suivi 1 « sait » quelle valeur effective de la distance D₁ ou D₂ sera à déterminer. A titre d'exemple, dans le cas où l'orientation +m est dirigée vers la pointe 4 et qu'elle est ici dirigée vers une direction opposée à la surface de référence, le système de suivi 1 détermine que le contact concerne l'extrémité 4' et qu'il va déterminer la valeur effective de la distance D₂. L'unité de traitement détermine alors la valeur d'un paramètre κ'(tₙ) représentatif du contact de l'extrémité 4' sur la surface de référence 2. Ce paramètre κ' est similaire au paramètre κ si ce n'est qu'il est associé à l'extrémité 4'.

Lors de l'étape 31, dans cet exemple où il y a contact entre de l'extrémité 4' sur la surface de référence 2, l'unité de calcul 11 détermine alors la valeur effective de la distance D₂ aimant 6 - extrémité 4',et incrémente alors l'indicateur k' d'une unité : k'+1. Cet indicateur garde ici la même valeur tant que l'on reste dans la même phase de contact. Par ailleurs, l'indicateur k associé à la pointe 4 reste inchangé.

Pour déterminer la valeur effective D_{2(k'+1)} de la distance D₂, l'unité de calcul 11 détermine la distance D_{2I} séparant la position P_{A} de l'aimant 6 et la position P_{I} du point I, le point I étant toujours défini comme étant le point d'intersection entre la surface de référence 2 et la droite parallèle au moment magnétique m et passant donc par l'extrémité 4' (et par la pointe 4). De manière similaire à ce qui a été décrit précédemment, la valeur effective de la distance D_{2(k'+1)}(tₙ) est égale à ∥P_{A}P_{I}(tₙ)∥ : D_{2(k'+1)}(tₙ) = ∥P_{A}P_{I}(tₙ)∥.

Lors de l'étape 32, l'unité de calcul 11 met à jour la valeur enregistrée de la distance D_{2(k'+1)} aimant 6 - extrémité 4' dans la mémoire 13.

Lors de l'étape 33, l'unité de calcul 11 détermine la position P_{P'}(tₙ) de l'extrémité 4' sur la surface de référence 2 à l'instant courant, à partir du vecteur d'état X_{A}(tₙ) déterminé préalablement, et à partir de la distance D_{2(k'+1)} mise à jour.

Les autres étapes sont identiques ou similaires à celles décrites précédemment. Ainsi, à chaque phase de contact, il y a mise à jour de la distance D₁ (aimant - pointe 4) ou de la distance D₂ (aimant - extrémité 4'), et incrémentation de l'indicateur correspondant k ou k'. On bénéficie ainsi d'un stylet 3 dont les deux extrémités opposées 4, 4' peuvent être suivies et dont le contact de chacune d'elles sur la surface de référence 2 permet de mettre à jour sa distance effective qui la sépare de l'aimant 6. On limite ainsi les erreurs de localisation, pour chacune de ces extrémités 4, 4', dans le cas où l'aimant 6 serait déplacé vis-à-vis de sa position d'origine.

Des modes de réalisation particuliers viennent d'être décrits. Différentes variantes et modifications apparaîtront à l'homme du métier.

## Revendications

1. Procédé de suivi d'une première extrémité (4) d'un ustensile (3) manipulé par un utilisateur, un objet magnétique (6) étant solidaire de l'ustensile (3) et éloigné de la première extrémité (4) suivant un axe longitudinal Δ de l'ustensile (3) d'une première distance (D₁) non nulle, l'objet magnétique (6) présentant un moment magnétique m colinéaire à l'axe longitudinal Δ, le procédé comportant les étapes suivantes :
o manipulation de l'ustensile (3) par un utilisateur, la première extrémité (4) étant alternativement en contact et en non-contact avec une surface de référence (2),
o mesure d'un champ magnétique émis par l'objet magnétique (6) à différents instants de mesure successifs, par un réseau de magnétomètres (Mᵢ) solidaires de la surface de référence (2) ;
o détermination d'un vecteur d'état X_{A}(tₙ) représentatif de la position P_{A}(tₙ) et du moment magnétique m(tₙ) de l'objet magnétique (6), à partir des mesures du champ magnétique ;
o détermination de la position P_{P}(tₙ) de la première extrémité (4) de l'ustensile (3) à partir du vecteur d'état X_{A}(tₙ) et d'une valeur enregistrée (D₁₍ₖ₎) préalablement de la première distance (D₁) entre la première extrémité (4) et l'objet magnétique (6) ;
° détermination d'un paramètre κ(tₙ) représentatif d'un contact entre la première extrémité (4) et la surface de référence (2) appartenant à un capteur tactile (20);
**caractérisé en ce que**, la première distance (D₁) étant modifiée, lors de la manipulation de l'ustensile (3) alors que la première extrémité (4) n'est pas en contact avec la surface de référence (2), par translation de l'objet magnétique (6) suivant l'axe longitudinal Δ de sorte qu'elle présente une valeur dite effective (D₁₍ₖ₊₁₎) différente de la valeur enregistrée (D₁₍ₖ₎), le procédé comporte les étapes suivantes :
∘ lorsque le contact est détecté par le capteur tactile (20) :
• détermination d'une valeur (D_{1I(k+1)}) d'une première distance dite projetée (D_{1I}), celle-ci étant égale à une distance entre la position Pₐ(tₙ) de l'objet magnétique (6) et une position P_{I}(tₙ) d'un point d'intersection I entre la surface de référence (2) et une droite colinéaire au moment magnétique m(tₙ) ; puis
• détermination de la valeur effective (D₁₍ₖ₊₁₎) de la première distance (D₁) à partir de la valeur déterminée (D_{1I(k+1)}) de la première distance projetée (D₁ᵢ) ;
• mise à jour de la valeur enregistrée de la première distance (D₁) par remplacement de la valeur enregistrée préalable (D₁₍ₖ₎) par la valeur effective déterminée (D₁₍ₖ₊₁₎) de la première distance (D₁).

2. Procédé selon la revendication 1, dans lequel la valeur (D_{1I(k+1)}) de la première distance projetée (D₁₁) est déterminée à partir d'une norme ∥P_{A}P_{I}(tₙ)∥ d'un premier vecteur P_{A}P_{I}(tₙ) allant de la position P_{A} de l'objet magnétique (6) à la position P_{I} du point d'intersection I, cette norme ∥P_{A}P_{I}(tₙ)∥ du premier vecteur P_{A}P_{I}(tₙ) étant déterminée à partir d'une norme ||m|| du moment magnétique m, de la coordonnée m_{z} du moment magnétique suivant un axe vertical orthogonal au plan de la surface de référence (2), et à partir d'une première distance h_{A,z} suivant l'axe vertical entre la position P_{A} de l'objet magnétique (6) et la surface de référence (2).

3. Procédé selon la revendication 2, dans lequel, lorsque le contact est détecté, la position P_{I}(tₙ) du point d'intersection I est déterminée à partir de la position P_{A}(tₙ) de l'objet magnétique (6) et à partir du premier vecteur P_{A}P_{I}(tₙ), celui-ci étant déterminé à partir de la norme ∥P_{A}P_{I}(tₙ)∥ préalablement déterminée, du moment magnétique m et de la norme ||m|| du moment magnétique.

4. Procédé selon la revendication 3, dans lequel, lorsque le contact est détecté, la première extrémité (4) présentant une forme courbe, et le moment magnétique m présentant un angle d'inclinaison ϕ non nul vis-à-vis de l'axe vertical, de sorte que la première extrémité (4) comporte une zone d'extrémité située dans le prolongement de l'axe longitudinal Δ, ainsi qu'une zone de contact, distincte de la zone d'extrémité, au niveau de laquelle la première extrémité (4) est au contact de la surface de référence (2), une position de contact effectif P_{C} étant alors déterminée à partir de la position P_{A} et du moment magnétique m de l'objet magnétique (6), et à partir d'au moins un paramètre géométrique préenregistré représentatif de la forme courbe de la première extrémité (4).

5. Procédé selon la revendication 4, dans lequel le paramètre géométrique préenregistré est le centre d'une sphère de rayon R dont une surface est tangente localement à une surface de la première extrémité (4) et passant par la position P_{P} et par la position de contact effectif P_{C}, la position de contact effectif P_{C} étant déterminée à partir du moment magnétique m et de sa norme ||m|| et à partir d'une distance h'_{A,z} suivant l'axe vertical entre la position P_{A} de l'objet magnétique (6) et un plan parallèle à la surface de référence (2) et passant par le centre de la sphère.

6. Procédé selon la revendication 4 ou 5, dans lequel la position de contact effectif P_{C} de la première extrémité (4) est affichée sur une interface graphique (7).

7. Procédé selon l'une quelconque des revendications 1 à 6, dans lequel est affichée sur une interface graphique (7) la position P_{P}(tₙ) de la première extrémité (4), ou une position de la première extrémité (4) déterminée par projection de la position Pₚ(tₙ) sur la surface de référence (2) suivant un axe colinéaire au moment magnétique m(tₙ) ou suivant un axe vertical orthogonal à la surface de référence (2).

8. Procédé selon l'une quelconque des revendications 1 à 7, dans lequel la position Pₚ(tₙ) de la première extrémité (4) est déterminée à partir du moment magnétique m, de sa norme ||m||, et de la valeur enregistrée de la première distance projetée (D_{1I(k+1)}), ou lorsqu'aucune mise à jour de la première distance (D₁) n'a encore eu lieu, de la valeur préenregistrée (D₁₍ₖ₌₀₎) de ladite première distance (D₁).

9. Procédé selon l'une quelconque des revendications 1 à 8, dans lequel l'étape de détermination de la première distance projetée (D_{1I(k+1)}) n'est pas effectuée lorsque le moment magnétique m de l'objet magnétique (6) présente un angle d'inclinaison ϕ supérieur à 60° vis-à-vis d'un axe vertical orthogonal au plan de la surface de référence (2).

10. Procédé selon l'une quelconque des revendications 1 à 9, dans lequel le capteur tactile (20) est inactif tant que la position P_{P} de la première extrémité (4) est supérieure à une valeur seuil prédéfinie P_{P,th} suivant un axe vertical orthogonal au plan de la surface de référence (2), et est activé électriquement lorsque la position P_{P} est inférieure ou égale à la valeur seuil P_{P,th}.

11. Procédé selon l'une quelconque des revendications 1 à 10, le capteur tactile (20) étant un capteur matriciel comportant une matrice de pixels distincts solidaires de la surface de référence (2) et adaptés à fournir un signal électrique de réponse représentatif d'un contact de la première extrémité (4) sur la surface de référence (2), le procédé comportant une détermination d'au moins un pixel dit le plus proche présentant une distance vis-à-vis de la position P_{I}(tₙ) inférieure ou égale à une valeur seuil prédéfinie, seul le pixel le plus proche étant activé pour détecter le contact.

12. Procédé selon l'une quelconque des revendications 1 à 11, l'ustensile (3) comportant une deuxième extrémité (4') opposée à la première extrémité (4) suivant l'axe longitudinal Δ, l'objet magnétique (6) étant éloigné de la deuxième extrémité (4') suivant un axe longitudinal Δ d'une deuxième distance (D₂) non nulle, le procédé comportant une étape de détermination de l'orientation +m ou -m du moment magnétique m dirigée vers la première extrémité (4).

13. Procédé selon la revendication 12, assurant en outre le suivi de la deuxième extrémité (4') de l'ustensile (3), la deuxième distance (D₂) entre la deuxième extrémité (4') et l'objet magnétique (6) pouvant être modifiée lors de la manipulation, et comportant les étapes suivantes :
o au cours de l'étape de manipulation de l'ustensile (3) par un utilisateur, la deuxième extrémité (4') est alternativement en contact et en non-contact avec une surface de référence (2), lors de la manipulation de l'ustensile (3) alors que la deuxième extrémité (4') n'est pas au contact avec la surface de référence (2), la deuxième distance (D₂) est modifiée par translation de l'objet magnétique (6) suivant l'axe longitudinal Δ de sorte qu'elle présente une deuxième valeur dite effective (D_{2(k'+1)}) différente d'une deuxième valeur enregistrée (D_{2(k')}),;
o détermination de la position P_{P'}(tₙ) de la deuxième extrémité (4') de l'ustensile (3) à partir du vecteur d'état Xₐ(tₙ), de la valeur enregistrée (D_{2(k')}) préalablement de la deuxième distance (D₂), et de l'orientation du moment magnétique m en direction de la deuxième extrémité (4') ;
o détermination d'un paramètre κ'(tₙ) représentatif d'un contact entre la deuxième extrémité (4') et la surface de référence (2), et lorsque le contact est détecté par le capteur tactile (20) :
• détermination d'une valeur (D_{2I(k'+1)}) d'une deuxième distance dite projetée (D_{2I}), celle-ci étant égale à une distance entre la position P_{A}(tₙ) de l'objet magnétique (6) et une position P_{I}(tₙ) d'un point d'intersection I entre la surface de référence (2) et une droite colinéaire au moment magnétique m(tₙ), puis ;
• détermination de la valeur effective (D_{2(k'+1)}) de la deuxième distance (D₂) à partir de la valeur déterminée (D_{2I(k'+1)}) de la deuxième distance projetée (D₂ᵢ) ;
• mise à jour de la valeur enregistrée de la deuxième distance (D₂) par remplacement de la valeur enregistrée préalable (D_{2(k')}) par la valeur effective déterminée (D_{2(k'+1)}) de la deuxième distance (D₂).

14. Système de suivi (1) d'une première extrémité (4) d'un ustensile (3), comportant :
o un ustensile (3),
• destiné à être manipulé par un utilisateur pour amener la première extrémité (4) à être alternativement en contact et en non-contact avec une surface de référence (2),
• un objet magnétique (6) étant solidaire de l'ustensile (3) et éloigné de la première extrémité (4) suivant un axe longitudinal Δ de l'ustensile (3) d'une première distance (D₁) non nulle pouvant varier lors de la manipulation de l'ustensile (3) par un utilisateur alors que la première extrémité (4) n'est pas en contact avec la surface de référence (2) par translation de l'objet magnétique (6) suivant l'axe longitudinal Δ de sorte qu'elle présente une valeur dite effective (D₁₍ₖ₊₁₎) différente d'une valeur enregistrée (D₁₍ₖ₎), l'objet magnétique (6) présentant un moment magnétique m colinéaire à l'axe longitudinal Δ ;
o un dispositif de localisation (10), comportant :
• un réseau de magnétomètres (Mᵢ), solidaire de la surface de référence (2), et adaptés à mesurer un champ magnétique émis par l'objet magnétique (6) ;
• une unité de calcul électronique (11), comportant une valeur enregistrée (D₁₍ₖ₎) préalablement de la première distance entre la première extrémité (4) et l'objet magnétique (6), et étant adaptée à
- déterminer un vecteur d'état X_{A}(tₙ) représentatif d'une position P_{A}(tₙ) et du moment magnétique m(tₙ) de l'objet magnétique (6) à partir du champ magnétique mesuré,
- déterminer une position Pₚ(tₙ) de la première extrémité (4) à partir du vecteur d'état X_{A} X_{A}(tₙ) et de la valeur enregistrée (D₁₍ₖ₎) préalablement de la première distance (D₁) ;
- lorsqu'un contact est détecté entre la première extrémité (4) et la surface de référence (2) par un capteur tactile (20), déterminer une valeur (D_{1I(k+1)}) d'une première distance dite projetée (D_{1I}), celle-ci étant égale à une distance entre la position P_{A}(tₙ) de l'objet magnétique (6) et une position P_{I}(tₙ) d'un point d'intersection I entre la surface de référence (2) et une droite colinéaire au moment magnétique m(tₙ), puis déterminer la valeur effective (D₁₍ₖ₊₁₎) de la première distance (D₁) à partir de la valeur déterminée (D_{1I(k+1)}) de la première distance projetée (D₁ᵢ) ; et mettre à jour de la valeur enregistrée de la première distance (D₁) par remplacement de la valeur enregistrée préalable (D₁₍ₖ₎) par la valeur effective déterminée (D₁₍ₖ₊₁₎) de la première distance (D₁) ;
o le capteur tactile (20), comportant la surface de référence (2), adaptée à détecter un contact entre la première extrémité (4) et la surface de référence (2), et à transmettre l'information de contact au dispositif de localisation (10).

## Patentansprüche

1. Verfahren zum Verfolgen eines ersten Endes (4) eines Utensils (3), das durch einen Benutzer gehandhabt wird, wobei ein magnetisches Objekt (6) mit dem Utensil (3) fest verbunden und von dem ersten Ende (4) entlang einer Längsachse △ des Utensils (3) um einen ersten Abstand (D₁), der nicht null ist, entfernt ist, wobei das magnetische Objekt (6) ein magnetisches Moment m kollinear zu der Längsachse △ aufweist, das Verfahren umfassend die folgenden Schritte:
o Handhaben des Utensils (3) durch einen Benutzer, wobei das erste Ende (4) abwechselnd in Kontakt und nicht in Kontakt mit einer Referenzoberfläche (2) steht,
o Messen eines Magnetfelds, das durch das magnetische Objekt (6) zu verschiedenen aufeinanderfolgenden Messzeitpunkten emittiert wird, durch ein Netzwerk von Magnetometern (Mᵢ), die mit der Referenzoberfläche (2) fest verbunden sind;
o Bestimmen eines Zustandsvektors X_{A}(tₙ), der die Position Pₐ(tₙ) und das magnetische Moment m(tₙ) des magnetischen Objekts (6) darstellt, aus den Messungen des Magnetfelds;
o Bestimmen der Position Pᵣ(tₙ) des ersten Endes (4) des Utensils (3) aus dem Zustandsvektor X_{A}(tₙ) und einem zuvor aufgezeichneten Wert (D₁₍ₖ₎) des ersten Abstands (D₁) zwischen dem ersten Ende (4) und dem magnetischen Objekt (6);
o Bestimmen eines Parameters κ(tₙ), der einen Kontakt zwischen dem ersten Ende (4) und der Referenzoberfläche (2), die zu einem Berührungssensor (20) gehört, darstellt;
**dadurch gekennzeichnet, dass** der erste Abstand (D₁) während des Handhabens des Utensils (3), während das erste Ende (4) mit der Referenzoberfläche (2) nicht in Kontakt steht, durch die Verschiebung des magnetischen Objekts (6) entlang der Längsachse △ modifiziert wird, sodass er einen sogenannten Istwert (D₁₍ₖ₊₁₎) aufweist, der sich von dem aufgezeichneten Wert (D₁₍ₖ₎) unterscheidet, wobei das Verfahren die folgenden Schritte umfasst:
o wenn der Kontakt durch den Berührungssensor (20) erkannt wird:
• Bestimmen eines Werts (D₁ₗ₍ₖ₊₁₎) eines ersten sogenannten projizierten Abstands (D₁ₗ), wobei dieser gleich einem Abstand zwischen der Position P_{A}(tₙ) des magnetischen Objekts (6) und einer Position Pₗ(tₙ) eines Schnittpunkts I zwischen der Referenzoberfläche (2) und einer kollinearen Geraden an dem magnetischen Moment m(tₙ) ist; dann
• Bestimmen des Istwerts (D₁₍ₖ₊₁₎) des ersten Abstands (D₁) von dem bestimmten Wert (D₁ₗ₍ₖ₊₁₎) des ersten projizierten Abstands (D_{1I});
• Aktualisieren des aufgezeichneten Werts des ersten Abstands (D₁) durch Ersetzen des zuvor aufgezeichneten Werts (D₁₍ₖ₎) durch den bestimmten Istwert (D₁₍ₖ₊₁₎) des ersten Abstands (D₁).

2. Verfahren nach Anspruch 1, wobei der Wert (D₁ₗ₍ₖ₊₁₎) des ersten projizierten Abstands (D₁ₗ) aus einer Regel ∥P_{A}Pₗ(tₙ)∥ eines ersten Vektors P_{A}Pₗ(tₙ) von der Position P_{A} des magnetischen Objekts (6) an Position Pₗ von dem Schnittpunkt I bestimmt wird, wobei diese Regel ∥P_{A}Pₗ(tₙ)∥ des ersten Vektors P_{A}Pₗ(tₙ) aus einer Regel ∥m∥ des magnetischen Moments m der Koordinate m_{z} des magnetischen Moments entlang einer vertikalen Achse orthogonal zu der Ebene der Referenzoberfläche (2) und aus einem ersten Abstand h_{A,z} entlang der vertikalen Achse zwischen der Position P_{A} des magnetischen Objekts (6) und der Referenzoberfläche (2) bestimmt wird.

3. Verfahren nach Anspruch 2, wobei, wenn der Kontakt erkannt wird, die Position Pₗ(tₙ) des Schnittpunkts I aus der Position P_{A}(tₙ) des magnetischen Objekts (6) und aus dem ersten Vektor P_{A}Pₗ(tₙ) bestimmt wird, wobei dieser Wert aus der zuvor bestimmten Regel ∥P_{A}Pₗ(tₙ)∥ des magnetischen Moments m und der Regel ∥m∥ des magnetischen Moments bestimmt wird.

4. Verfahren nach Anspruch 3, wobei, wenn der Kontakt erkannt wird, das erste Ende (4) eine gekrümmte Form aufweist und das magnetische Moment m einen Neigungswinkel Φ, der nicht null ist, gegenüber der vertikalen Achse aufweist, sodass das erste Ende (4) eine Endzone, die sich in der Verlängerung der Längsachse △ befindet, sowie eine Kontaktzone umfasst, die sich von der Endzone unterscheidet, an der das erste Ende (4) mit der Referenzoberfläche (2) in Kontakt steht, eine Kontakt-Istposition P_{C} dann aus der Position P_{A} und dem magnetischen Moment m des magnetischen Objekts (6) und aus mindestens einem vorab aufgezeichneten geometrischen Parameter, der die gekrümmte Form des ersten Endes (4) darstellt, bestimmt wird.

5. Verfahren nach Anspruch 4, wobei der vorab aufgezeichnete geometrische Parameter der Mittelpunkt einer Kugel mit Radius R ist, deren Oberfläche eine Oberfläche des ersten Endes (4) lokal berührt und durch die Position P_{P} und durch die Kontakt-Istposition P_{C} verläuft, wobei die Kontakt-Istposition P_{C} aus dem magnetischen Moment m und seiner Regel ∥m∥ und aus einem Abstand h'_{A,z} entlang der vertikalen Achse zwischen der Position P_{A} des magnetischen Objekts (6) und einer Ebene, die parallel zu der Referenzoberfläche (2) ist und durch den Mittelpunkt der Kugel verläuft, bestimmt wird.

6. Verfahren nach Anspruch 4 oder 5, wobei die Kontakt-Istposition P_{c} des ersten Endes (4) auf einer grafischen Benutzeroberfläche (7) angezeigt wird.

7. Verfahren nach einem der Ansprüche 1 bis 6, wobei die Position Pₚ(tₙ) des ersten Endes (4) auf einer grafischen Benutzeroberfläche (7) oder eine Position des ersten Endes (4), die durch die Projektion der Position Pₚ(tₙ) auf der Referenzoberfläche (2) entlang einer Achse, die kollinear mit dem magnetischen Moment m(tₙ) ist, oder entlang einer vertikalen Achse orthogonal zu der Referenzoberfläche (2) bestimmt wird, angezeigt wird.

8. Verfahren nach einem der Ansprüche 1 bis 7, wobei die Position Pₚ(tₙ) des ersten Endes (4) aus dem magnetischen Moment m, seiner Regel ∥m∥ und dem aufgezeichneten Wert des ersten projizierten Abstands (D₁ₗ₍ₖ₊₁₎), oder wenn noch keine Aktualisierung des ersten Abstand (D₁) stattgefunden hat, des vorab aufgezeichneten Werts (D₁₍ₖ₌₀₎) des ersten Abstands (D₁) bestimmt wird.

9. Verfahren nach einem der Ansprüche 1 bis 8, wobei der Schritt des Bestimmens des ersten projizierten Abstands (D_{1I(k+1)}) nicht ausgeführt wird, wenn das magnetische Moment m des magnetischen Objekts (6) einen Neigungswinkel Φ größer als 60° gegenüber einer vertikalen Achse aufweist, die orthogonal zu der Ebene der Referenzoberfläche (2) ist.

10. Verfahren nach einem der Ansprüche 1 bis 9, wobei der Berührungssensor (20) inaktiv ist, während die Position P_{P} des ersten Endes (4) größer als ein vordefinierter Schwellenwert P_{P,th} entlang einer vertikalen Achse orthogonal zu der Ebene der Referenzoberfläche (2) ist, und elektrisch aktiviert wird, wenn die Position P_{P} kleiner als oder gleich dem Schwellenwert P_{P,th} ist.

11. Verfahren nach einem der Ansprüche 1 bis 10, wobei der Berührungssensor (20) ein Matrixsensor ist, umfassend eine Matrix aus unterschiedlichen Pixeln, die mit der Referenzoberfläche (2) verbunden sind und angepasst sind, um ein elektrisches Antwortsignal bereitzustellen, das einen Kontakt des ersten Endes (4) auf der Referenzoberfläche (2) darstellt, das Verfahren umfassend ein Bestimmen von mindestens einem sogenannten nächstgelegenen Pixel, das einen Abstand gegenüber der Position Pₗ(tₙ) aufweist, der kleiner als oder gleich einem vordefinierten Schwellenwert ist, wobei nur das nächstgelegene Pixel zum Erkennen des Kontakts aktiviert wird.

12. Verfahren nach einem der Ansprüche 1 bis 11, das Utensil (3) umfassend ein zweites Ende (4'), das dem ersten Ende (4) entlang der Längsachse △ gegenüberliegt, wobei das magnetische Objekt (6) entlang einer Längsachse △ um einen zweiten Abstand (D₂), der nicht null ist, von dem zweiten Ende (4') entfernt ist, das Verfahren umfassend einen Schritt zum Bestimmen der Ausrichtung +m oder - m des magnetischen Moments m, das zu dem ersten Ende (4) gerichtet wird.

13. Verfahren nach Anspruch 12, das ferner die Verfolgung des zweiten Endes (4') des Utensils (3) sicherstellt, wobei der zweite Abstand (D₂) zwischen dem zweiten Ende (4') und dem magnetischen Objekt (6) während des Handhabens modifiziert werden kann, und umfassend die folgenden Schritte:
o während des Schritts des Handhabens des Utensils (3) durch einen Benutzer ist das zweite Ende (4') abwechselnd in Kontakt und nicht in Kontakt mit einer Referenzoberfläche (2), während des Handhabens des Utensils (3), während das zweite Ende (4') nicht in Kontakt mit der Referenzoberfläche (2) steht, wird der zweite Abstand (D₂) durch die Verschiebung des magnetischen Objekts (6) entlang der Längsachse △ modifiziert, sodass er einen zweiten sogenannten Istwert (D_{2(k'+1)}) aufweist, der sich von einem zweiten aufgezeichneten Wert (D_{2(k')}) unterscheidet;
o Bestimmen der Position P_{P'}(tₙ) des zweiten Endes (4') des Utensils (3) aus dem Zustandsvektor X_{A}(tₙ), dem zuvor aufgezeichneten Wert (D_{2(k')}) des zweiten Abstands (D₂) und der Ausrichtung des magnetischen Moments m in Richtung des zweiten Endes (4');
o Bestimmen eines Parameters k'(tₙ), der einen Kontakt zwischen dem zweiten Ende (4') und der Referenzoberfläche (2) darstellt, und wenn der Kontakt durch den Berührungssensor (20) erkannt wird:
• Bestimmen eines Werts (D_{2l(k'+1)}) eines ersten zweiten sogenannten projizierten Abstands (D₂ₗ), wobei dieser gleich einem Abstand zwischen der Position Pₐ(tₙ) des magnetischen Objekts (6) und einer Position Pₗ(tₙ) eines Schnittpunkts I zwischen der Referenzoberfläche (2) und einer kollinearen Geraden an dem magnetischen Moment m(tₙ) entspricht, dann;
• Bestimmen des Istwerts (D_{2(k'+1)}) des zweiten Abstands (D₂) von dem bestimmten Wert (D_{2l(k'+1)}) des zweiten projizierten Abstands (D₂ᵢ);
• Aktualisieren des aufgezeichneten Werts des zweiten Abstands (D₂) durch Ersetzen des zuvor aufgezeichneten Werts (D_{2(k')}) durch den bestimmten Istwert (D_{2(k'+1)}) des zweiten Abstands (D₂).

14. System (1) zum Verfolgen eines ersten Endes (4) eines Utensils (3), umfassend:
o ein Utensil (3),
• das dafür bestimmt ist, durch einen Benutzer gehandhabt zu werden, um das erste Ende (4) dazu zu bringen, mit einer Referenzoberfläche (2) abwechselnd in Kontakt und nicht in Kontakt zu stehen,
• ein magnetisches Objekt (6), das mit dem Utensil (3) fest verbunden ist und von dem ersten Ende (4) entlang einer Längsachse △ des Utensils (3) um einen ersten Abstand (D₁), der nicht null ist, entfernt ist, der während der Handhabung des Utensils (3) durch einen Benutzer, während das erste Ende (4) nicht mit der Referenzoberfläche (2) in Kontakt steht, durch die Verschiebung des magnetischen Objekts (6) entlang der Längsachse △ variieren kann, sodass er einen sogenannten Istwert (D₁₍ₖ₊₁₎) aufweist, der sich von einem aufgezeichneten Wert (D₁₍ₖ₎) unterscheidet, wobei das magnetische Objekt (6) ein magnetisches Moment m kollinear mit der Längsachse △ aufweist;
o eine Lokalisierungsvorrichtung (10), umfassend:
• ein Netzwerk von Magnetometern (Mᵢ), die mit der Referenzoberfläche (2) fest verbunden und angepasst sind, um ein Magnetfeld, das durch das magnetische Objekt (6) emittiert wird, zu messen;
• eine elektronische Recheneinheit (11), umfassend einen zuvor aufgezeichneten Wert (D₁₍ₖ₎) des ersten Abstands zwischen dem ersten Ende (4) und dem magnetischen Objekt (6), und die angepasst ist zum
- Bestimmen eines Zustandsvektors X_{A}(tₙ), der eine Position Pₐ(tₙ) und das magnetische Moment m(tₙ) des magnetischen Objekts (6) darstellt, aus dem gemessenen Magnetfeld,
- Bestimmen einer Position Pₚ(tₙ) des ersten Endes (4) aus dem Zustandsvektor X_{A} X_{A}(tₙ) und dem zuvor aufgezeichneten Wert (D₁₍ₖ₎) des ersten Abstands (D₁);
- wenn ein Kontakt zwischen dem ersten Ende (4) und der Referenzoberfläche (2) durch einen Berührungssensor (20) erkannt wird, Bestimmen eines Werts (D₁₁₍ₖ₊₁₎) eines ersten sogenannten projizierten Abstands (D₁ₗ), wobei dieser gleich einem Abstand zwischen der Position P_{A}(tₙ) des magnetischen Objekts (6) und einer Position Pₗ(tₙ) eines Schnittpunkts I zwischen der Referenzoberfläche (2) und einer kollinearen Geraden an dem magnetischen Moment m(tₙ) ist, dann Bestimmen des Istwerts (D₁₍ₖ₊₁₎) des ersten Abstands (D₁) aus dem Bestimmten Wert (D₁ₗ₍ₖ₊₁₎) des ersten projizierten Abstands (D₁ᵢ); und Aktualisieren des aufgezeichneten Werts des ersten Abstands (D₁) durch Ersetzen des zuvor aufgezeichneten Werts (D₁₍ₖ₎) durch den bestimmten Istwert (D₁₍ₖ₊₁₎) des ersten Abstands (D₁);
o den Berührungssensor (20), umfassend die Referenzoberfläche (2), der angepasst ist, um einen Kontakt zwischen dem ersten Ende (4) und der Referenzoberfläche (2) zu erkennen und um die Kontaktinformationen an die Lokalisierungsvorrichtung (10) zu übertragen.

## Claims

1. Method for tracking a first end (4) of a utensil (3) handled by a user, a magnetic object (6) being securely fastened to the utensil (3) and remote from the first end (4) along a longitudinal axis △ of the utensil (3) by a first non-zero distance (D₁), the magnetic object (6) having a magnetic moment m collinear to the longitudinal axis △, the method comprising the following steps:
∘ handling the utensil (3) by a user, the first end (4) being alternately in contact and not in contact with a reference surface (2),
∘ measuring a magnetic field emitted by the magnetic object (6) at different successive measurement instants, by means of a network of magnetometers (Mᵢ) securely fastened to the reference surface (2);
∘ determining a state vector X_{A}(tₙ) representative of the position P_{A}(tₙ) and the magnetic moment m(tₙ) of the magnetic object (6), on the basis of the measurements of the magnetic field;
∘ determining the position Pₚ(tₙ) of the first end (4) of the utensil (3) on the basis of the state vector X_{A}(tₙ) and of a previously recorded value (D₁₍ₖ₎) of the first distance (D₁) between the first end (4) and the magnetic object (6);
∘ determining a parameter κ(tₙ) representative of a contact between the first end (4) and the reference surface (2) belonging to a touch sensor (20);
**characterized in that**, the first distance (D₁) is modified, during the handling of the utensil (3) while the first end (4) is not in contact with the reference surface (2), by translation of the magnetic object (6) along the longitudinal axis △ such that it has a value, referred to as the actual value, (D₁₍ₖ₊₁₎) that is different from the recorded value (D₁₍ₖ₎), the method comprises the following steps:
∘ when the contact is
detected by the touch sensor (20):
• determining a value (D_{1I(k+1)}) of a first distance, referred to as the projected distance (D_{1I}), which is equal to a distance between the position P_{A}(tₙ) of the magnetic object (6) and a position P_{I}(tₙ) of a point of intersection I between the reference surface (2) and a straight line collinear with the magnetic moment m(tₙ); then
• determining the actual value (D_{1(K+1)}) of the first distance (D₁) on the basis of the determined value (D_{1I(K+1)}) of the first projected distance (D₁ᵢ);
• updating the recorded value of the first distance (D₁) by replacing the previous recorded value (D₁₍ₖ₎) with the determined actual value (D₁₍ₖ₊₁₎) of the first distance (D₁).

2. Method according to claim 1, wherein the value (D_{1I(k+1)}) of the first projected distance (D_{1I}) is determined on the basis of a norm ∥P_{A}P_{I}(tₙ)∥ of a first vector P_{A}P_{I}(tₙ) going from the position P_{A} of the magnetic object (6) to the position P₁ of the point of intersection I, this norm ∥P_{A}P_{I}(tₙ)∥ of the first vector P_{A}P_{I}(tₙ) being determined on the basis of a norm ∥m∥ of the magnetic moment m, of the coordinate m_{z} of the magnetic moment along a vertical axis orthogonal to the plane of the reference surface (2), and on the basis of a first distance h_{A,z} along the vertical axis between the position P_{A} of the magnetic object (6) and the reference surface (2).

3. Method according to claim 2, wherein, when the contact is detected, the position P_{I}(tₙ) of the point of intersection I is determined on the basis of the position P_{A}(tₙ) of the magnetic object (6) and on the basis of the first vector P_{A}P_{I}(tₙ), which is determined on the basis of the previously determined norm ∥P_{A}P_{I}(tₙ)∥, of the magnetic moment m and of the norm ∥m∥ of the magnetic moment.

4. The method according to claim 3, wherein, when contact is detected, the first end (4) having a curved shape, and the magnetic moment m having a non-zero angle of inclination Φ relative to the vertical axis, so that the first end (4) comprises an end region located in the extension of the longitudinal axis △, as well as a contact region, separate from the end region, at which the first end (4) is in contact with the reference surface (2), an actual contact position P_{C} then being determined on the basis of the position P_{A} and of the magnetic moment m of the magnetic object (6), and on the basis of at least one pre-recorded geometric parameter representative of the curved shape of the first end (4).

5. The method according to claim 4, wherein the pre-recorded geometric parameter is the center of a sphere of radius R, one surface of which is locally tangent to a surface of the first end (4) and passing through the position P_{P} and the actual contact position P_{C}, the actual contact position P_{C} being determined on the basis of the magnetic moment m and of the norm ∥m∥ thereof and on the basis of a distance h'_{A,z} along the vertical axis between the position P_{A} of the magnetic object (6) and a plane parallel to the reference surface (2) and passing through the center of the sphere.

6. Method according to either claim 4 or claim 5, wherein the actual contact position P_{c} of the first end (4) is displayed on a graphical interface (7).

7. Method according to any of claims 1 to 6, wherein displayed on a graphical interface (7) is the position Pₚ(tₙ) of the first end (4), or a position of the first end (4) determined by projecting the position Pₚ(tₙ) on the reference surface (2) along an axis collinear with the magnetic moment m(tₙ) or along a vertical axis orthogonal to the reference surface (2).

8. Method according to any of claims 1 to 7, wherein the position Pₚ(tₙ) of the first end (4) is determined on the basis of the magnetic moment m, of the norm ∥m∥ thereof, and of the recorded value of the first projected distance (D_{1I(k+1)}), or when no update of the first distance (D₁) has yet occurred, of the pre-recorded value (D₁₍ₖ₌₀₎) of said first distance (D₁).

9. Method according to any of claims 1 to 8, wherein the step of determining the first projected distance (D_{1I(k+1)}) is not carried out when the magnetic moment m of the magnetic object (6) has an angle of inclination φ greater than 60° relative to a vertical axis orthogonal to the plane of the reference surface (2).

10. Method according to any of claims 1 to 9, wherein the touch sensor (20) is inactive as long as the position P_{P} of the first end (4) is greater than a predefined threshold value P_{P,th} along a vertical axis orthogonal to the plane of the reference surface (2), and is electrically activated when the position P_{P} is less than or equal to the threshold value P_{P,th}.

11. Method according to any of claims 1 to 10, the touch sensor (20) being a matrix sensor comprising a separate matrix of pixels securely fastened to the reference surface (2) and suitable for providing an electrical response signal representative of a contact of the first end (4) on the reference surface (2), the method comprising determining at least one pixel, referred to as the closest pixel, which has a distance relative to the position P_{I}(tₙ) less than or equal to a predefined threshold value, only the closest pixel being activated in order to detect the contact.

12. Method according to any of claims 1 to 11, the utensil (3) comprising a second end (4') opposite the first end (4) along the longitudinal axis △, the magnetic object (6) being remote from the second end (4') along a longitudinal axis △ by a non-zero second distance (D₂), the method comprising a step of determining the orientation +m or -m of the magnetic moment m directed toward the first end (4).

13. Method according to claim 12, additionally ensuring the tracking of the second end (4') of the utensil (3), the second distance (D₂) between the second end (4') and the magnetic object (6) being able to be modified during handling, and comprising the following steps:
∘ during the step of handling of the utensil (3) by a user, the second end (4') is alternately in contact and not in contact with a reference surface (2) during the handling of the utensil (3) while the second end (4') is not in contact with the reference surface (2), the second distance (D₂) is modified by translation of the magnetic object (6) along the longitudinal axis △ such that it has a second value, referred to as the actual value (D_{2(k'+1)}), that is different from a second recorded value (D_{2(k')}),;
∘ determining the position P_{P'}(tₙ) of the second end (4') of the utensil (3) on the basis of the state vector X_{A}(tₙ), of the previously recorded value (D_{2(k')}) of the second distance (D₂), and of the orientation of the magnetic moment m toward the second end (4');
∘ determining a parameter k'(tₙ) representative of a contact between the second end (4') and the reference surface (2), and when contact is detected by the touch sensor (20):
• determining a value (D_{2I(k'+1)}) of a second distance, referred to as the projected distance (D_{2I}), which is equal to a distance between the position P_{A}(tₙ) of the magnetic object (6) and a position P_{I}(tₙ) of a point of intersection I between the reference surface (2) and a straight line collinear with the magnetic moment m(tₙ), then;
• determining the actual value (D₂(_{k'+1})) of the second distance (D₂) on the basis of the determined value (D_{2I(k'+1)}) of the second projected distance (D₂ᵢ);
• updating the recorded value of the second distance (D₂) by replacing the previous recorded value (D_{2(k')}) with the determined actual value (D_{2(k'+1)}) of the second distance (D₂).

14. System (1) for tracking a first end (4) of a utensil (3), the system comprising:
∘ a utensil (3),
• intended to be handled by a user to cause the first end (4) to be alternately in contact and not in contact with a reference surface (2),
• a magnetic object (6) being securely fastened to the utensil (3) and remote from the first end (4) along a longitudinal axis △ of the utensil (3) by a first non-zero distance (D₁) that may vary during the handling of the utensil (3) by a user while the first end (4) is not in contact with the reference surface (2) by translation of the magnetic object (6) along the longitudinal axis △ such that it has a value, referred to as the actual value (D₁₍ₖ₊₁₎), that is different from a recorded value (D₁₍ₖ₎), the magnetic object (6) having a magnetic moment m collinear with the longitudinal axis △;
∘ a locating device (10), comprising:
• a network of magnetometers (Mᵢ), securely fastened to the reference surface (2), and suitable for measuring a magnetic field emitted by the magnetic object (6);
• an electronic computing unit (11), comprising a previously recorded value (D₁₍ₖ₎) of the first distance between the first end (4) and the magnetic object (6), and being suitable for
- determining a state vector X_{A}(tₙ) representative of the position P_{A}(tₙ) and of the magnetic moment m(tₙ) of the magnetic object (6) on the basis of the measured magnetic field,
- determining a position Pₚ(tₙ) of the first end (4) on the basis of the state vector X_{A} X_{A}(tₙ) and of a previously recorded value (D₁₍ₖ₎) of the first distance (D₁);
- when contact is detected between the first end (4) and the reference surface (2) by a touch sensor (20), determining a value (D_{1I(k+1)}) of a first distance, referred to as the projected distance (D_{1I}), which is equal to a distance between the position P_{A}(tₙ) of the magnetic object (6) and a position P_{I}(tₙ) of a point of intersection I between the reference surface (2) and a straight line collinear with the magnetic moment m(tₙ), then determining the actual value (D₁(ₖ₊₁)) of the first distance (D₁) on the basis of the determined value (D_{1I(k+1)}) of the first projected distance (D₁ᵢ); and updating the recorded value of the first distance (D₁) by replacing the previous recorded value (D₁₍ₖ₎) with the determined actual value (D₁₍ₖ₊₁₎) of the first distance (D₁);
∘ the touch sensor (20), comprising the reference surface (2), suitable for detecting contact between the first end (4) and the reference surface (2), and for transmitting the contact information to the locating device (10).
